(19) Europäisches Patentamt

European Patent Office

Office européen des brevets

(11) **EP 4 693 914 A1**

(12) **EUROPEAN PATENT APPLICATION**
published in accordance with Art. 153(4) EPC

(43) Date of publication:
**11.02.2026 Bulletin 2026/07**

(21) Application number: **23933374.3**

(22) Date of filing: **18.04.2023**

(51) International Patent Classification (IPC):
**H04B 1/69** *(2011.01)* **H04W 4/70** *(2018.01)*

(52) Cooperative Patent Classification (CPC):
**H04B 1/69; H04W 4/70**

(86) International application number:
**PCT/CN2023/088960**

(87) International publication number:
**WO 2024/216495 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **QIN, Kangjian**
  **Shenzhen, Guangdong 518129 (CN)**
• **ZHANG, Huazi**
  **Shenzhen, Guangdong 518129 (CN)**
• **WANG, Xianbin**
  **Shenzhen, Guangdong 518129 (CN)**
• **TONG, Jiajie**
  **Shenzhen, Guangdong 518129 (CN)**
• **WANG, Jun**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **COMMUNICATION METHOD, COMMUNICATION DEVICE, COMPUTER READABLE STORAGE MEDIUM, CHIP, AND COMPUTER PROGRAM PRODUCT**

(57) This application provides a communication method, a communication device, a computer-readable storage medium, a chip, and a computer program product. The communication method includes: determining a first matrix based on a quantity of active terminal devices in a plurality of terminal devices or a quantity of the plurality of terminal devices. The communication method further includes: determining a first sequence based on the first matrix, a probability distribution of to-be-sent data of the plurality of terminal devices, and a predetermined length of the first sequence associated with the plurality of terminal devices. The communication method further includes: performing spreading on modulated data by using the first sequence. The communication method includes: sending spread modulated data to a network device. In the method, sparseness of the active terminal device is used, so that channel decoding complexity can be reduced in a scenario in which the quantity of potential terminal devices is large and the quantity of active terminal devices is small.

FIG. 6

**Description**

**TECHNICAL FIELD**

This application relates to the communication field, and more specifically, to a communication method, a communication device, a computer-readable storage medium, a chip, and a computer program product.

**BACKGROUND**

In an orthogonal multiple access (Orthogonal Multiple Access, OMA) technology, transmission of data of different users is performed on mutually orthogonal sub-channels. Different from the OMA technology, in a non-orthogonal multiple access (Non-Orthogonal Multiple Access, NOMA) technology, data of different users is superimposed on a same sub-channel for transmission. In this way, fewer sub-channels are used for transmission of the data of the plurality of users. Although inter-user interference is introduced manually, spectral efficiency is improved. For example, if transmission of data of six users is performed by using the OMA technology, the six users need to be mapped to six mutually orthogonal sub-channels respectively. Although there is no interference between the users, six different and orthogonal time-frequency resources need to be occupied, resulting in low spectral efficiency. If a spreading sequence is designed by using the NOMA technology, the data of the six different users may be designedly superimposed on fewer than six (for example, four) different sub-channels for transmission. Although inter-user interference is introduced manually, fewer time-frequency resources are occupied, and therefore spectral efficiency is improved.

There are tens of millions of potential users for massive internet of things devices, and only a few of the potential users may be activated. Therefore, a proportion of active users is highly sparse. However, sparseness of the active users is not utilized well in existing solutions, and the existing solutions cannot be used due to high detection and decoding complexity in a scenario in which the quantity of potential users is large and the quantity of active users is small.

**SUMMARY**

This application provides a solution for communication.

According to a first aspect of this application, a communication method is provided. The method includes: determining a first matrix based on a quantity of active terminal devices in a plurality of terminal devices or a quantity of the plurality of terminal devices; determining a first sequence based on the first matrix, a probability distribution of to-be-sent data of the plurality of terminal devices, and a predetermined length of the first sequence associated with the plurality of terminal devices; performing spreading on modulated data by using the first sequence; and sending spread modulated data to a network device.

In the method, sparseness of the active terminal device is used, so that channel decoding complexity can be reduced in a scenario in which the quantity of potential terminal devices is large and a quantity of active terminal devices is small.

In a possible implementation, the method further includes: sending an activation signal to the network device; and receiving a response signal from the network device, where the response signal is associated with the activation signal and includes the quantity of active terminal devices and the predetermined length of the first sequence; and determining the first matrix includes: determining the first matrix based on the quantity of active terminal devices. In this manner, the terminal device may determine the quantity of active terminal devices, and then determine the first matrix based on the quantity of active terminal devices. Therefore, channel decoding complexity can be reduced by using sparseness of the active terminal device.

In a possible implementation, determining the first matrix includes: determining a dimension of the first matrix based on the quantity of active terminal devices. In this manner, the channel decoding complexity can be reduced by using the sparseness of the active terminal device.

In a possible implementation, the method further includes: receiving a broadcast signal from the network device, where the broadcast signal includes the quantity of the plurality of terminal devices, a ratio of the quantity of active terminal devices to the quantity of the plurality of terminal devices, and the predetermined length of the first sequence; and determining the first matrix includes: determining the first matrix based on the quantity of the plurality of terminal devices. In this manner, the terminal device may determine the quantity of the plurality of terminal devices, and then determine the first matrix based on the quantity of the plurality of terminal devices.

In a possible implementation, determining the first matrix includes: determining a dimension of the first matrix based on the quantity of the plurality of terminal devices.

In a possible implementation, determining the first sequence includes: determining, based on the ratio of the quantity of active terminal devices to the quantity of the plurality of terminal devices, the probability distribution of the to-be-sent data of the plurality of terminal devices.

According to a second aspect of this application, a communication method is provided. The method includes: determining a first matrix based on a quantity of active terminal devices in a plurality of terminal devices or a quantity of the plurality of terminal devices; determining a first sequence based on the first matrix, a probability distribution of to-be-sent data of the plurality of terminal devices, and a predetermined length of the first sequence associated with the plurality of terminal devices; receiving an aliased signal from the active terminal device, where the aliased signal includes a signal obtained by performing spreading on modulated data of the active terminal device by using the first sequence; and determining demodulated data of the active terminal device based on the aliased signal, the probability distribution of the to-be-sent data of the plurality of terminal devices, and the first sequence.

In the method, sparseness of the active terminal device is used, so that channel decoding complexity can be reduced in a scenario in which the quantity of potential terminal devices is large and a quantity of active terminal devices is small.

In a possible implementation, the method further includes: receiving an activation signal from the active terminal device; determining the quantity of active terminal devices based on the activation signal; and sending a response signal to the active terminal device, where the response signal is associated with the activation signal and includes the quantity of active terminal devices and the predetermined length of the first sequence; and determining the first matrix includes: determining the first matrix based on the quantity of active terminal devices. In this manner, a network device may determine the quantity of the plurality of terminal devices, and then determine the first matrix based on the quantity of the plurality of terminal devices.

In a possible implementation, determining the first matrix includes: determining a dimension of the first matrix based on the quantity of active terminal devices.

In a possible implementation, the method further includes: sending a broadcast signal to the plurality of terminal devices, where the broadcast signal includes the quantity of the plurality of terminal devices, a ratio of the quantity of active terminal devices to the quantity of the plurality of terminal devices, and the predetermined length of the first sequence; and determining the first matrix includes: determining the first matrix based on the quantity of the plurality of terminal devices. In this manner, the network device may determine the quantity of the plurality of terminal devices, and then determine the first matrix based on the quantity of the plurality of terminal devices.

In a possible implementation, determining the first matrix includes: determining a dimension of the first matrix based on the quantity of the plurality of terminal devices.

In a possible implementation, the method further includes the following which is performed at least once: performing channel decoding on the demodulated data of the active terminal device; determining demodulated data of a first subset of the active terminal device, where channel decoding of the demodulated data of the first subset is correct; and updating the demodulated data of the active terminal device by removing the demodulated data of the first subset from the aliased signal. In this manner, channel decoding performance can be improved.

In a possible implementation, the method further includes: determining, based on a probability distribution of sent data of the active terminal device, a probability distribution at a frozen position in polarized data associated with the sent data of the active terminal device; determining a posterior probability distribution at the frozen position based on an observation signal and the probability distribution at the frozen position; determining a value associated with the maximum posterior probability in the posterior probability distribution as a value at the frozen position; determining a probability distribution at a non-frozen position in the polarized data based on the value at the frozen position; determining a second predetermined quantity of pieces of polarized data based on the value at the frozen position and the probability distribution at the non-frozen position; determining, based on the second predetermined quantity of pieces of polarized data and the first matrix, an estimate of the sent data of the active terminal device; and determining, based on the estimate of the sent data of the active terminal device, a soft value of the sent data of the active terminal device. In this manner, the channel decoding performance can be improved.

According to a third aspect of this application, a communication method is provided. The method includes: determining a first matrix based on a quantity of active terminal devices in a plurality of terminal devices or a quantity of the plurality of terminal devices; determining a first sequence based on the first matrix, a probability distribution of to-be-sent data of the plurality of terminal devices, and a predetermined length of the first sequence associated with the plurality of terminal devices; and sending the first sequence to the active terminal device.

In the method, sparseness of the active terminal device is used, so that channel decoding complexity can be reduced in a scenario in which the quantity of potential terminal devices is large and a quantity of active terminal devices is small. In addition, the active terminal device does not need to determine the first sequence, but only needs to performing spreading on the sent data by using the first sequence. Therefore, implementation complexity of the active terminal device can be reduced.

In a possible implementation, the method further includes: receiving an activation signal from the active terminal device; and determining the quantity of active terminal devices based on the activation signal.

In a possible implementation, the method further includes: receiving an aliased signal from the active terminal device, where the aliased signal includes a signal obtained by performing spreading on modulated data of the active terminal device by using the first sequence; and determining demodulated data of the active terminal device based on the aliased signal and the probability distribution of the to-be-sent data of the plurality of terminal devices.

In a possible implementation, the method further includes the following which is performed at least once: performing channel decoding on the demodulated data of the active terminal device; determining demodulated data of a first subset of the active terminal device, where channel decoding of the demodulated data of the first subset is correct; and updating the demodulated data of the active terminal device by removing the demodulated data of the first subset from the aliased signal. In this manner, channel decoding performance can be improved.

In a possible implementation, the method further includes: determining, based on a probability distribution of sent data of the active terminal device, a probability distribution at a frozen position in polarized data associated with the sent data of the active terminal device; determining a posterior probability distribution at the frozen position based on an observation signal and the probability distribution at the frozen position; determining a value associated with the maximum posterior probability in the posterior probability distribution as a value at the frozen position; determining a probability distribution at a non-frozen position in the polarized data based on the value at the frozen position; determining a second predetermined quantity of pieces of polarized data based on the value at the frozen position and the probability distribution at the non-frozen position; determining, based on the second predetermined quantity of pieces of polarized data and the first matrix, an estimate of the sent data of the active terminal device; and determining, based on the estimate of the sent data of the active terminal device, a soft value of the sent data of the active terminal device. In this manner, the channel decoding performance can be improved.

According to a fourth aspect of this application, a terminal device is provided. The terminal device includes a processing unit and a sending unit.

The processing unit is configured to determine a first matrix based on a quantity of active terminal devices in a plurality of terminal devices or a quantity of the plurality of terminal devices. The processing unit is further configured to determine a first sequence based on the first matrix, a probability distribution of to-be-sent data of the plurality of terminal devices, and a predetermined length of the first sequence associated with the plurality of terminal devices. The processing unit is further configured to perform spreading on modulated data by using the first sequence. The sending unit is configured to send spread modulated data to a network device.

In a possible implementation, the sending unit is further configured to send an activation signal to the network device. The terminal device includes a receiving unit. The receiving unit is configured to receive a response signal from the network device. The response signal is associated with the activation signal and includes the quantity of active terminal devices and the predetermined length of the first sequence. The processing unit is configured to determine the first matrix based on the quantity of active terminal devices.

In a possible implementation, the processing unit is configured to determine a dimension of the first matrix based on the quantity of active terminal devices.

In a possible implementation, the receiving unit is further configured to receive a broadcast signal from the network device. The broadcast signal includes the quantity of the plurality of terminal devices, a ratio of the quantity of active terminal devices to the quantity of the plurality of terminal devices, and the predetermined length of the first sequence. The processing unit is configured to determine the first matrix based on the quantity of the plurality of terminal devices.

In a possible implementation, the processing unit is configured to determine a dimension of the first matrix based on the quantity of the plurality of terminal devices.

In a possible implementation, the processing unit is configured to determine, based on the ratio of the quantity of active terminal devices to the quantity of the plurality of terminal devices, the probability distribution of the to-be-sent data of the plurality of terminal devices.

According to a fifth aspect of this application, a network device is provided. The network device includes a processing unit and a receiving unit. The processing unit is configured to determine a first matrix based on a quantity of active terminal devices in a plurality of terminal devices or a quantity of the plurality of terminal devices. The processing unit is further configured to determine a first sequence based on the first matrix, a probability distribution of to-be-sent data of the plurality of terminal devices, and a predetermined length of the first sequence associated with the plurality of terminal devices. The receiving unit is configured to receive an aliased signal from the active terminal device. The aliased signal includes a signal obtained by performing spreading on modulated data of the active terminal device by using the first sequence. The processing unit is further configured to determine demodulated data of the active terminal device based on the aliased signal, the probability distribution of the to-be-sent data of the plurality of terminal devices, and the first sequence.

In a possible implementation, the receiving unit is further configured to receive an activation signal from the active terminal device. The processing unit is configured to determine the quantity of active terminal devices based on the activation signal. The network device further includes a sending unit. The sending unit is configured to send a response signal to the active terminal device. The response signal is associated with the activation signal and includes the quantity of active terminal devices and the predetermined length of the first sequence. The processing unit is configured to determine the first matrix based on the quantity of active terminal devices.

In a possible implementation, the processing unit is configured to determine a dimension of the first matrix based on the quantity of active terminal devices.

In a possible implementation, the network device further includes a sending unit. The sending unit is configured to send a broadcast signal to the plurality of terminal devices. The broadcast signal includes the quantity of the plurality of terminal devices, a ratio of the quantity of active terminal devices to the quantity of the plurality of terminal devices, and the predetermined length of the first sequence. The processing unit is configured to determine the first matrix based on the quantity of the plurality of terminal devices.

In a possible implementation, the processing unit is configured to determine a dimension of the first matrix based on the quantity of the plurality of terminal devices.

In a possible implementation, the processing unit is further configured to perform the following at least once: performing channel decoding on the demodulated data of the active terminal device; determining demodulated data of a first subset of the active terminal device, where channel decoding of the demodulated data of the first subset is correct; and updating the demodulated data of the active terminal device by removing the demodulated data of the first subset from the aliased signal.

According to a sixth aspect of this application, a network device is provided. The network device includes a processing unit and a sending unit. The processing unit is configured to determine a first matrix based on a quantity of active terminal devices in a plurality of terminal devices or a quantity of the plurality of terminal devices. The processing unit is further configured to determine a first sequence based on the first matrix, a probability distribution of to-be-sent data of the plurality of terminal devices, and a predetermined length of the first sequence associated with the plurality of terminal devices. The sending unit is configured to send the first sequence to the active terminal device.

In a possible implementation, the network device further includes a receiving unit. The receiving unit is configured to receive an activation signal from the active terminal device. The processing unit is further configured to determine the quantity of active terminal devices based on the activation signal.

In a possible implementation, the network device further includes a receiving unit. The receiving unit is configured to receive an aliased signal from the active terminal device. The aliased signal includes a signal obtained by performing spreading on modulated data of the active terminal device by using the first sequence. The processing unit is further configured to determine demodulated data of the active terminal device based on the aliased signal and the probability distribution of the to-be-sent data of the plurality of terminal devices.

In a possible implementation, the processing unit is further configured to perform the following at least once: performing channel decoding on the demodulated data of the active terminal device; determining demodulated data of a first subset of the active terminal device, where channel decoding of the demodulated data of the first subset is correct; and updating the demodulated data of the active terminal device by removing the demodulated data of the first subset from the aliased signal.

According to a seventh aspect of this application, a communication device is provided. The communication device includes a processor and a memory. The memory includes computer program code. The computer program code, when run by the processor, causes the method according to any one of the first aspect, the second aspect, and the third aspect to be performed.

According to an eighth aspect of this application, a computer-readable storage medium is provided. The computer-readable storage medium stores a computer program, and when the computer program is executed by a processor, the method according to any one of the first aspect, the second aspect, and the third aspect is implemented.

According to a ninth aspect of this application, a computer program product is provided. The computer program product is tangibly stored in a computer-readable medium and includes computer-executable instructions, and when the computer-executable instructions are executed, a device is caused to implement the method according to any one of the first aspect, the second aspect, and the third aspect.

According to a tenth aspect of this application, a chip is provided. The chip is configured to perform the method according to any one of the first aspect, the second aspect, and the third aspect.

According to an eleventh aspect of this application, a communication system is provided. The communication system includes the terminal device according to the fourth aspect and the network device according to the fifth aspect or the sixth aspect.

## BRIEF DESCRIPTION OF DRAWINGS

Features, advantages, and other aspects of implementations of this application become more apparent with reference to accompanying drawings and the following detailed descriptions. Several implementations of this application are shown herein by way of example but not limitation. In the accompanying drawings:

FIG. 1 is a block diagram of a communication system in which a possible implementation of this application may be implemented;

FIG. 2 is a diagram of a basic procedure of wireless communication according to a possible implementation of this application;

FIG. 3 is a diagram of infinite field polarization according to a possible implementation of this application;

FIG. 4 is a diagram of a basic infinite field polarization unit according to a possible implementation of this application;

FIG. 5 is a diagram of polarization layers according to a possible implementation of this application;

FIG. 6 is a flowchart of a communication method according to a possible implementation of this application;

FIG. 7 is a diagram of sending data by an active terminal device according to a possible implementation of this application;

FIG. 8A is a flowchart of a communication method according to another possible implementation of this application;

FIG. 8B is a flowchart of a communication method according to still another possible implementation of this application;

FIG. 9 is a flowchart of a method for determining a first sequence according to a possible implementation of this application;

FIG. 10 shows an example of a first matrix according to a possible implementation of this application;

FIG. 11 is a flowchart of a method for determining a first sequence according to another possible implementation of this application;

FIG. 12 shows an example of a first matrix according to another possible implementation of this application;

FIG. 13A and FIG. 13B respectively are signaling exchange diagrams of data sending processes according to possible implementations of this application;

FIG. 14 is a diagram of sending data by an active terminal device according to a possible implementation of this application;

FIG. 15A and FIG. 15B respectively are signaling exchange diagrams of data sending processes according to other possible implementations of this application;

FIG. 16 is a diagram of sending data by an active terminal device according to another possible implementation of this application;

FIG. 17 is a diagram of receiving data by a receiver device according to a possible implementation of this application;

FIG. 18 is a diagram of receiving data by a receiver device according to a possible implementation of this application;

FIG. 19 is a flowchart of a channel decoding method according to a possible implementation of this application;

FIG. 20 is a diagram of a channel decoding process according to a possible implementation of this application;

FIG. 21 shows a simulation result of large iterative decoding according to a possible implementation of this application;

FIG. 22 shows a simulation result of large iterative decoding according to another possible implementation of this application;

FIG. 23 is a flowchart of a method for generating a soft value of encoded data of a terminal device according to a possible implementation of this application;

FIG. 24 shows a simulation result of generating a soft value based on infinite field list decoding according to a possible implementation of this application;

FIG. 25 is a block diagram of a terminal device according to a possible implementation of this application;

FIG. 26 is a block diagram of a network device according to a possible implementation of this application;

FIG. 27 is a block diagram of a network device according to another possible implementation of this application; and

FIG. 28 is a simplified block diagram of an example device suitable for implementing a possible implementation of this application.

In the accompanying drawings, the same or similar reference numerals indicate the same or similar elements.

## DESCRIPTION OF EMBODIMENTS

The following describes possible implementations of this application in more detail with reference to the accompanying drawings.

In descriptions of the possible implementations of this application, the term "include" and similar terms thereof should be understood as non-exclusive inclusion, that is, "including but not limited to". The term "based on" should be understood as "at least partially based on". The term "a possible implementation" or "the possible implementation" should be understood as "at least one possible implementation". The terms "first", "second", and the like may indicate different objects or a same object. Other explicit and implicit definitions may also be included below. An expression similar to "at least one of A, B, and C" or "at least one of A, B, or C" should be understood as any one of the following: at least one A; at least one B; at least one C; at least one A and at least one B; at least one A and at least one C; at least one B and at least one C; and at least one A, at least one B, and at least one C. The foregoing uses three elements A, B, and C as an example for description. When there are more elements in the expression, the meaning of the expression may be obtained according to the foregoing rule.

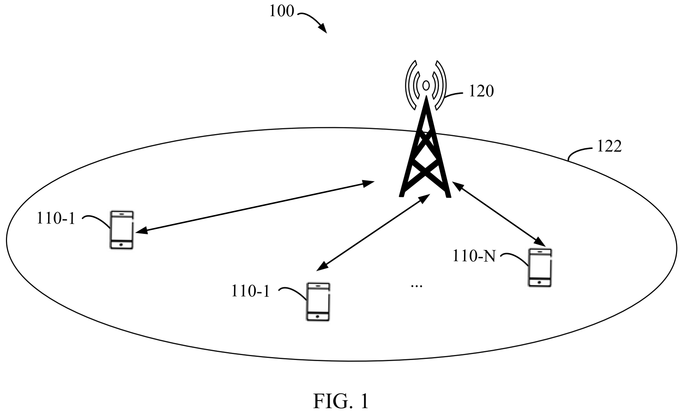

FIG. 1 is a block diagram of a communication system 100 in which a possible implementation of this application may be implemented. As shown in the figure, the communication system 100 includes terminal devices 110-1, 110-2, ..., and 110-M, and a network device 120. In the following descriptions, the terminal devices 110-1, 110-2, ..., and 110-M are also referred to as a UE #1, a UE #2, ..., and a UE #M (where M is a positive integer). In addition, in the following descriptions, the terminal devices 110-1, 110-2, ..., and 110-M are collectively referred to as a terminal device 110 or separately referred to as the terminal device 110.

The terminal device 110 is a device with a wireless transceiver function. The terminal device 110 may be deployed on land, including an indoor device, an outdoor device, a handheld device, or a vehicle-mounted device; may be deployed on water (such as a ship); or may be deployed in the air (for example, on aircraft, a balloon, or a satellite). The terminal device 110 may be a mobile phone (Mobile Phone), a tablet (Pad), a computer with a wireless transceiver function, a virtual reality (Virtual Reality, VR) terminal device, an augmented reality (Augmented Reality, AR) terminal device, a wearable device, an internet of things device, a wireless terminal device in industrial control (Industrial Control), a wireless terminal device in self driving (Self Driving), a wireless terminal device in remote medical (Remote Medical), a wireless terminal device in a smart grid (Smart Grid), a wireless terminal in transportation safety (Transportation Safety), a wireless terminal device in a smart city (Smart City), a wireless terminal device in a smart home (Smart Home), a user equipment (User Equipment, UE), or the like.

The network device 120 is a radio access network (Radio Access Network, RAN) device that connects the terminal device 110 to a wireless network. A coverage area of the network device 120 is referred to as a cell 122. An example of the RAN device may include but is not limited to: a next-generation mobile communication NodeB (Next-generation NodeB, gNB), a transmission reception point (Transmission Reception Point, TRP), an evolved NodeB (Evolved NodeB, eNB), a radio network controller (Radio Network Controller, RNC), a NodeB (NodeB, NB), a base station controller (Base Station Controller, BSC), a base transceiver station (Base Transceiver Station, BTS), a home base station (for example, a home evolved NodeB or a home NodeB), a baseband unit (Baseband Unit, BBU), a wireless fidelity (Wireless Fidelity, Wi-Fi) access point (Access Point, AP), an integrated access and backhaul (Integrated Access and Backhaul, IAB) node, or the like. In a possible implementation, the network device 120 may include a central unit (Central Unit, CU), a distributed unit (Distributed Unit, DU), or both the CU and the DU.

An example of the communication system 100 may include but is not limited to: a narrowband-internet of things (Narrowband-Internet of Things, NB-IoT) system, a global system for mobile communications (Global System for Mobile Communications, GSM), an enhanced data rates for GSM evolution (Enhanced Data rates for GSM Evolution, EDGE) system, a wideband code division multiple access (Wideband Code Division Multiple Access, WCDMA) system, a code division multiple access 2000 (Code Division Multiple Access 2000, CDMA2000) system, a time division-synchronous code division multiple access (Time Division-Synchronous Code Division Multiple Access, TD-SCDMA) system, a long term evolution (Long Term Evolution, LTE) system and an enhanced mobile broadband (Enhanced Mobile Broadband, eMBB) in three application scenarios of a next generation 5G mobile communication system, ultra-reliable low-latency communication (Ultra-reliable Low-Latency Communication, URLLC), or enhanced machine-type communication (enhanced Machine-Type Communication, eMTC).

It may be understood that a quantity of terminal devices and a quantity of network devices shown in FIG. 1 are merely examples, and are not intended to impose any limitation. According to an actual requirement, the communication system 100 may include any appropriate quantity of terminal devices and any appropriate quantity of network devices.

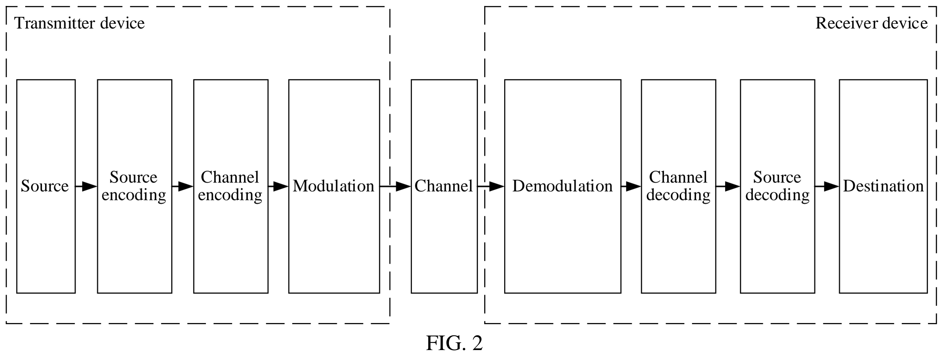

FIG. 2 is a diagram of a basic procedure of wireless communication according to a possible implementation of this application. As shown in FIG. 2, after performing source encoding, channel encoding, and modulation on a bitstream generated by a source, a transmitter device sends the bitstream to a receiver device through a noisy channel. The receiver device performs demodulation, channel decoding, and source decoding on a received signal, to restore the bitstream generated by the source. In uplink transmission, the transmitter device may be the terminal device 110 in FIG. 1, and the receiver device may be the network device 120 in FIG. 1. In downlink transmission, the transmitter device may be the network device 120 in FIG. 1, and the receiver device may be the terminal device 110 in FIG. 1.

Infinite field polarization means performing polarization transformation in an infinite field. The infinite field is a number field in which a quantity of valid elements is not limited. Common infinite fields may include but are not limited to a real number field, a complex number field, and an integer field. The polarization transformation is linear transformation. N polarized channels may be generated by performing polarization transformation on N elements. The N polarized channels are N virtual channels generated by transforming an input distribution of the N elements by using an infinite field polarization matrix. Each polarized channel has a different "degree of chaos", and the degree of chaos may be represented by, for example, a "conditional variance". A lower degree of chaos indicates a smaller conditional variance and fewer optional valid values. A higher degree of chaos indicates a larger conditional variance and more optional valid values.

The infinite field polarization can be used for data compression. Data with a length of M in the infinite field is compressed to data with a length of N (where M and N are positive integers, and N<M). The infinite field polarization has a good compression capability for a sparse signal. A sparser signal indicates a better compression capability of the infinite field polarization. Infinite field compression is performed, through the infinite field polarization, on data of a plurality of users before transmission of the data, so that a system capacity can be increased, thereby improving spectral efficiency. Transmission of compressed data is performed on a polarized channel with a high degree of chaos.

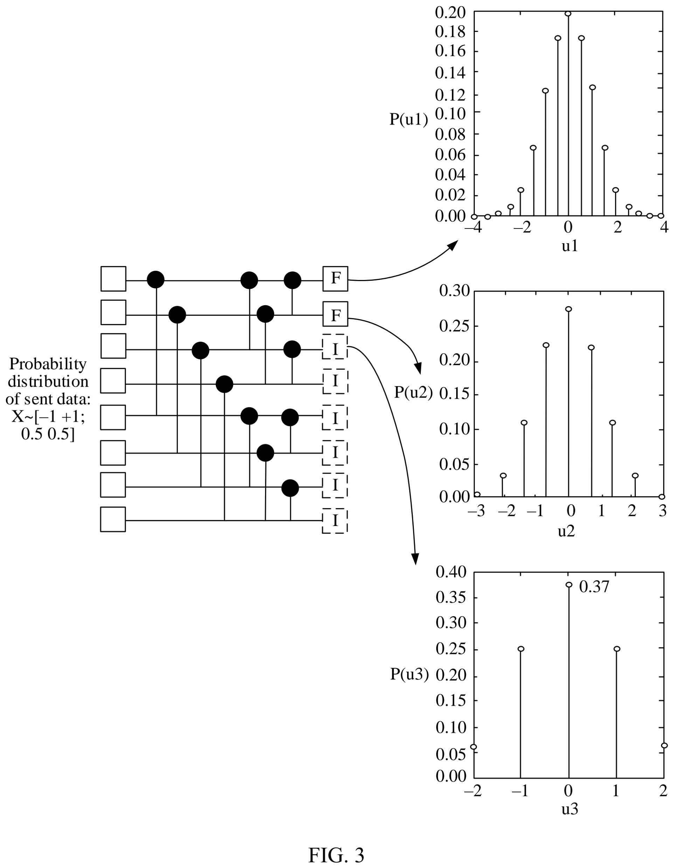

Examples of performing data compression through infinite field polarization are described below with reference to FIG. 3 to FIG. 5.

FIG. 3 is a diagram of infinite field polarization according to a possible implementation of this application. In the example in FIG. 3, data with a length of 8 (that is, M=8) is compressed to data with a length of 2 (that is, N=2). As shown in FIG. 3, eight blocks on the leftmost side represent modulated data of M=8 terminal devices, and a probability with which modulated data of each terminal device is set to +1 is equal to a probability with which modulated data of each terminal device is set to -1 (where the probability of being set to +1 is 0.5 and the probability of being set to -1 is 0.5). That is, sent data of each terminal device is modulated by using binary phase shift keying (Binary Phase shift keying, BPSK). Black circles represent addition operations, and direct lines represent copy operations. One black circle and four nodes associated with the black circle form a basic infinite field polarization unit (referred to as a "basic polarization unit" for short). According to an

operation rule: $[c, d] = [a, b] \times \frac{1}{\sqrt{2}} \begin{bmatrix} 1 & 1 \\ 1 & -1 \end{bmatrix}$, two output symbols [c, d] on the right side are obtained based on two inputs [a, b] on the left side in a basic infinite field polarization unit.

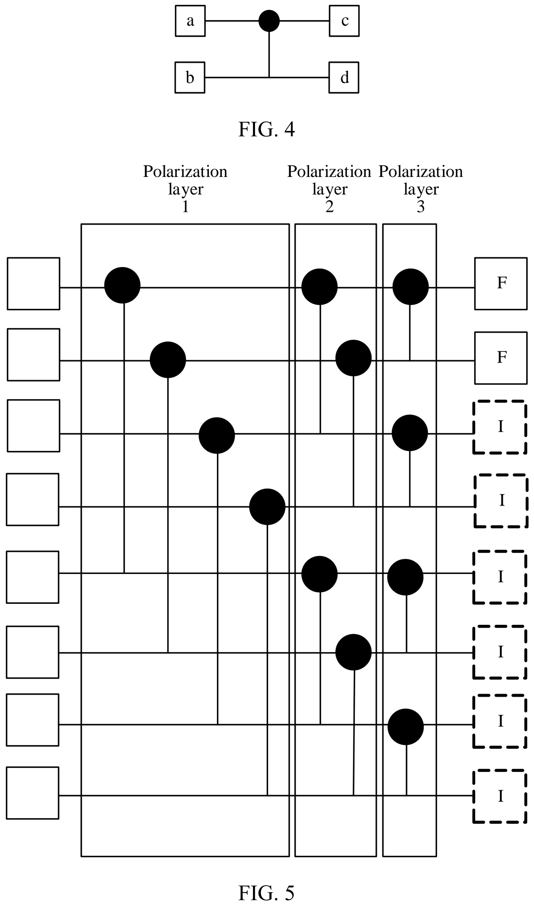

FIG. 4 shows an example of a basic infinite field polarization unit. a and b respectively represent modulated data of terminal devices UE #1 and UE #2, and c and d respectively represent polarized data (also referred to as data obtained through polarization) of the terminal devices UE #1 and UE #2 after an operation of a layer of basic polarization unit is performed on a and b. If a=1 and b=-1, $c=(a+b)/\sqrt{2}=0$, and $d=(a-b)/\sqrt{2}=\sqrt{2}$, where dividing by $\sqrt{2}$ is a normalization operation, for ensuring that power before polarization transformation and power after polarization transformation are consistent. Similarly, if a=1 and b=1, $c=(a+b)/\sqrt{2}=\sqrt{2}$, and $d=(a-b)/\sqrt{2}=0$; if a=-1 and b=1, $c=(a+b)/\sqrt{2}=0$, and $d=(a-b)/\sqrt{2}=-\sqrt{2}$; or if a=-1 and b=-1, $c=(a+b)/\sqrt{2}=-\sqrt{2}$, and $d=(a-b)/\sqrt{2}=0$.

It may be found that after the operation of a layer of basic polarization unit, there are three valid values of c, that is, $c=\{-\sqrt{2}, 0, \sqrt{2}\}$, and probabilities that c is set to the three values are {0.25, 0.5, 0.25}, and a uniform distribution is no longer satisfied. In addition, it may be found that, after a valid value of c is determined, a valid value range of d may also be determined correspondingly. For example, when it is determined that c is set to $-\sqrt{2}$ or $\sqrt{2}$, d has only one valid value 0; and when it is determined that c is set to 0, d has two valid $\text{values}=\{-\sqrt{2}, \sqrt{2}\}$, where both quantities of valid values of d are smaller than the quantity 3 of valid values of c.

It can be found from this example that a quantity of valid values of polarized data (for example, data on the right side in FIG. 4) is greater than a quantity of valid values before polarization (on the left side) (where a and b on the left side each have only two valid values, and c on the right side has three valid values). In addition, after a former value (for example, the value of c) after polarization is given, a quantity of valid values of latter polarized data (for example, the value of d) is less than the quantity of valid values of the former polarized data, and this phenomenon becomes more apparent as M increases.

FIG. 5 is a diagram of polarization layers according to a possible implementation of this application. As shown in FIG. 5, when M=8, there are $\log_2(M)=3$ polarization layers in total, and each polarization layer includes four basic polarization units. Eight pieces of polarized data on the rightmost side are obtained through layer-by-layer polarization. Different from M=8 pieces of input data on the leftmost side, a probability distribution of the eight pieces of polarized data on the rightmost side are not uniform distributions, and the data is data that complies with a specific discrete distribution. A value range of the data is not limited to {-1, +1}, but has a plurality of valid values, and probabilities of all the valid values are not necessarily uniformly distributed. After a valid value of former data is given, a quantity of valid values of latter polarized data is reduced. In other words, after infinite field polarization is performed, a degree of chaos of former data is higher, and latter data is more monotonous. The infinite field polarization utilizes this, for performing data compression. Eight pieces of polarized data on the right side may be obtained by performing $\log_2(M)=3$-layer polarization transformation on M=8 pieces of data with uniform distributions, and conditional probability distributions of the eight pieces of polarized data are different from each other. To compress the data, only N (for example, N=2) positions with largest conditional variances are reserved as compressed data (where a quantity of valid values is the largest and uncertainty of the valid value is the greatest), remaining M-N (8-2=6) pieces of data with smallest conditional variances are discarded as to-be-restored data, and transmission of the remaining data is not to be performed (where a quantity of valid values is the smallest, and there may be only one valid value). In this way, data with a length of 8 (that is, M=8) is compressed to data with a length of 2 (that is, N=2).

At a receiving end, the six pieces of compressed polarized data (data indicated by I in FIG. 5) may be restored by using successive cancellation decoding in an infinite field. Assuming that distributions of eight inputs on the left side (where the distributions herein are eight uniform distributions in which probabilities of being set to values in {-1, +1} are equal) and observed data at two frozen positions (data indicated by F in FIG. 5) are known to the receiving end, based on a successive cancellation decoding algorithm in the infinite field, the remaining six pieces of data may be decompressed and restored by using a recursive method. With reference to the two known observed values, eight polarized signals on the rightmost side are restored. Then, the signals on the right side are transformed to the signals on the leftmost side through polarization transformation, to obtain modulated data (data indicated by eight black boxes on the leftmost side) of the terminal device before the infinite field polarization.

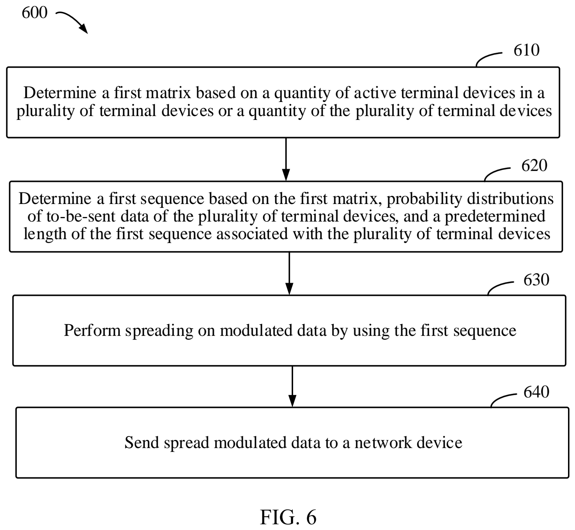

FIG. 6 is a flowchart of a communication method 600 according to a possible implementation of this application. In a possible implementation, the method 600 may be implemented by the terminal device 110 in the example communication system 100, for example, may be implemented by a processor or a processing unit of the terminal device 110 in cooperation with another component (for example, a transceiver). In another possible implementation, the method 600 may alternatively be implemented by another communication apparatus independent of the example communication system 100.

In block 610, the terminal device 110 determines a first matrix based on a quantity of active terminal devices in a plurality of terminal devices or a quantity of the plurality of terminal devices. In the context of this application, the "active terminal device" is a terminal device that is activated and that is to send data. Correspondingly, a "silent terminal device" is a terminal device that is not activated, in other words, a terminal device that is not to send data.

In a possible implementation, the "plurality of terminal devices" may include all or some terminal devices in the cell 122 shown in FIG. 1. All or some of the "plurality of terminal devices" may be "active terminal devices".

In block 620, the terminal device 110 determines a first sequence based on the first matrix, a probability distribution of to-be-sent data of the plurality of terminal devices, and a predetermined length of the first sequence associated with the plurality of terminal devices.

In block 630, the terminal device 110 performs spreading on modulated data by using the first sequence. Because the first sequence is used for performing spreading on the modulated data, the "first sequence" is also referred to as a "spreading sequence" or an "infinite field sequence" below.

In block 640, the terminal device 110 sends spread modulated data to a network device 120.

In the method 600, sparseness of the active terminal device is used, so that channel decoding complexity can be reduced in a scenario in which the quantity of potential terminal devices is large and a quantity of active terminal devices is small.

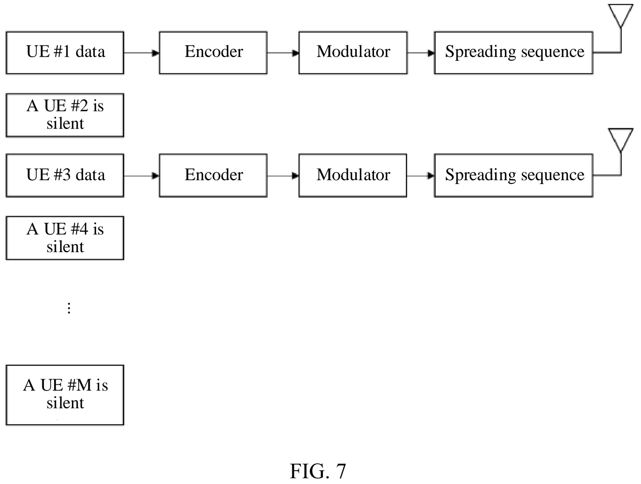

FIG. 7 is a diagram of sending data by an active terminal device according to a possible implementation of this application. In the implementation of FIG. 7, it is assumed that two active terminal devices (for example, the UE #1 and the UE #3) in M terminal devices (for example, the UE #1, the UE #2, ..., and the UE #M in FIG. 1) are to send data. First, the UE #1 and the UE #3 separately perform channel encoding on to-be-sent binary data by using a channel encoder, to obtain codeword sequences (that is, {0, 1} sequences). Then, the UE #1 and the UE #3 respectively perform modulation (for example, BPSK modulation) on the codeword sequences by using a modulator, to obtain modulated symbol sequences (for example, {-1, +1} sequences). Further, the UE #1 and the UE #3 respectively perform spreading on modulated data by using a spreading sequence. For example, spreading is performed by multiplying each modulated symbol by the spreading sequence. Finally, the UE #1 and the UE #3 respectively send spread data to an air interface for transmission.

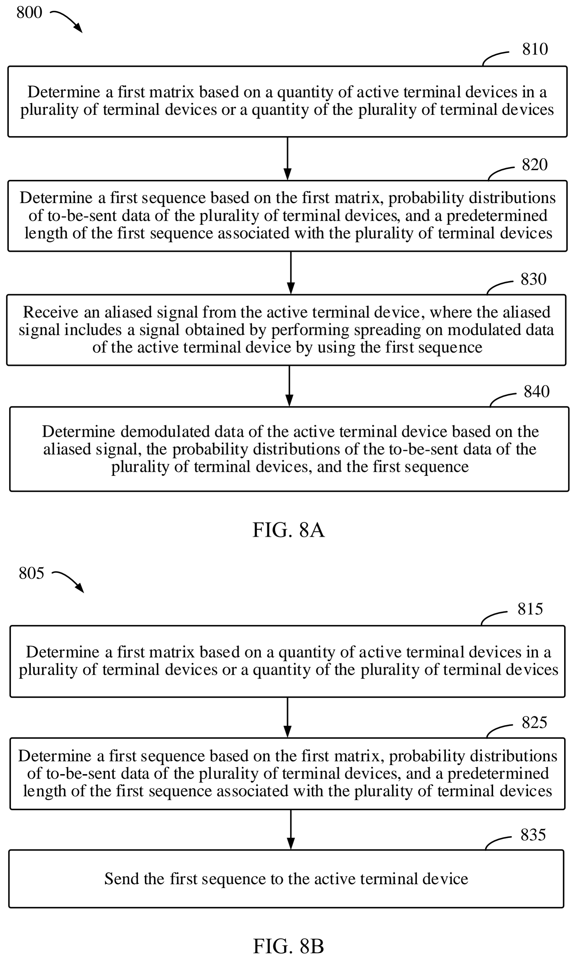

FIG. 8A is a flowchart of a communication method 800 according to a possible implementation of this application. In a possible implementation, the method 800 may be implemented by the network device 120 in the example communication system 100, for example, may be implemented by a processor or a processing unit of the network device 120 in cooperation with another component (for example, a transceiver). In another possible implementation, the method 800 may alternatively be implemented by another communication apparatus independent of the example communication system 100.

In block 810, the network device 120 determines a first matrix based on a quantity of active terminal devices in a plurality of terminal devices or a quantity of the plurality of terminal devices.

In block 820, the network device 120 determines a first sequence based on the first matrix, a probability distribution of to-be-sent data of the plurality of terminal devices, and a predetermined length of the first sequence associated with the plurality of terminal devices.

In block 830, the network device 120 receives an aliased signal from the active terminal device. The aliased signal includes a signal obtained by performing spreading on modulated data of the active terminal device by using the first sequence.

In block 840, the network device 120 determines demodulated data of the active terminal device based on the aliased signal, the probability distribution of the to-be-sent data of the plurality of terminal devices, and the first sequence.

In the method 800, sparseness of the active terminal device is used, so that channel decoding complexity can be reduced in a scenario in which the quantity of potential terminal devices is large and a quantity of active terminal devices is small.

FIG. 8B is a flowchart of a communication method 805 according to a possible implementation of this application.

In a possible implementation, the method 805 may be implemented by the network device 120 in the example communication system 100, for example, may be implemented by a processor or a processing unit of the network device 120 in cooperation with another component (for example, a transceiver). In another possible implementation, the method 805 may alternatively be implemented by another communication apparatus independent of the example communication system 100.

In block 815, the network device 120 determines a first matrix based on a quantity of active terminal devices in a plurality of terminal devices or a quantity of the plurality of terminal devices.

In block 825, the network device 120 determines a first sequence based on the first matrix, a probability distribution of to-be-sent data of the plurality of terminal devices, and a predetermined length of the first sequence associated with the plurality of terminal devices.

In block 835, the network device 120 sends the first sequence to the active terminal device.

In the method 805, sparseness of the active terminal device is used, so that channel decoding complexity can be reduced in a scenario in which the quantity of potential terminal devices is large and a quantity of active terminal devices is small. In addition, the active terminal device does not need to determine the first sequence, but only needs to performing spreading on the sent data by using the first sequence. Therefore, implementation complexity of the active terminal device can be reduced.

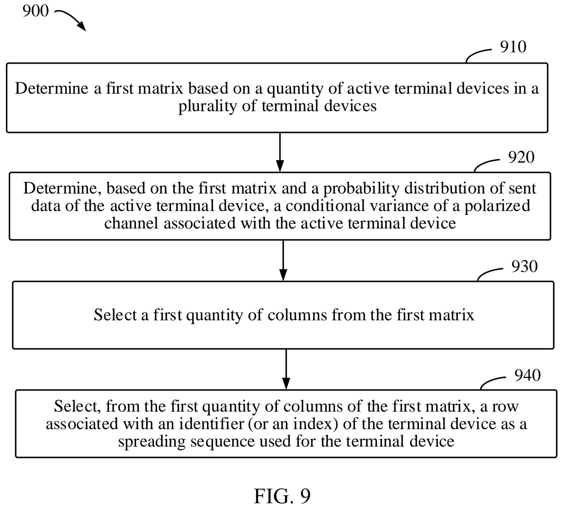

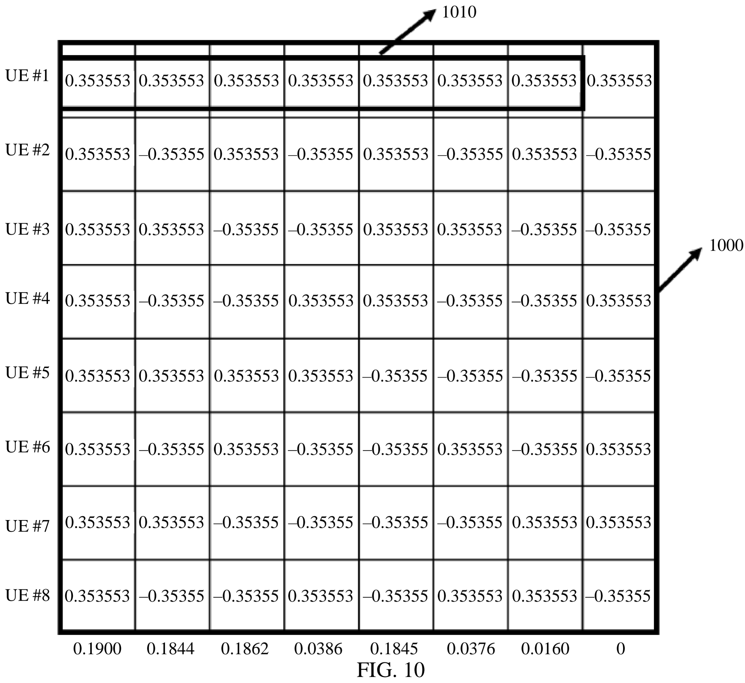

In a possible implementation, a receiver device (for example, the network device 120) may first perform detection of the active terminal device in the plurality of terminal devices, and then perform channel decoding on demodulated data of the active terminal device (hereinafter referred to as "Manner 1" for short). In this possible implementation, because the receiver device first performs detection of the active terminal device in the plurality of terminal devices, and then performs channel decoding, the receiver device already knows which terminal device in the plurality of terminal devices is the active terminal device. Therefore, only a spreading sequence used for the active terminal device needs to be determined, and a quantity of rows (columns) of the corresponding first matrix is equal to the quantity of active terminal devices. In the following descriptions, a process of determining the spreading sequence according to this possible implementation is described with reference to FIG. 9 and FIG. 10.

FIG. 9 is a flowchart of a method 900 for determining a first sequence (namely, a spreading sequence) according to a possible implementation of this application. The method 900 may be understood as an example implementation of the method 600, 800, or 805. In a possible implementation, the method 900 may be implemented by the terminal device 110 in the example communication system 100, for example, may be implemented by a processor or a processing unit of the terminal device 110 in cooperation with another component (for example, a transceiver). Alternatively, the method 900 may be implemented by the network device 120 in the example communication system 100, for example, may be implemented by a processor or a processing unit of the network device 120 in cooperation with another component (for example, a transceiver). In another possible implementation, the method 900 may alternatively be implemented by another communication apparatus independent of the example communication system 100. In the following descriptions, the method 900 is described by using the terminal device 110 as an example. In the method 900, the terminal device 110 is an active terminal device.

In block 910, the terminal device 110 determines a first matrix based on a quantity of active terminal devices in a plurality of terminal devices.

In a possible implementation, the terminal device 110 may determine a dimension (represented by W) of the first matrix based on the quantity of active terminal devices. In an implementation in which the first matrix is a square matrix, the dimension of the first matrix is equal to a quantity of rows or a quantity of columns of the first matrix. For example, the terminal device 110 may determine the dimension of the first matrix based on the following:

$$W = 2^{\lceil \log_2 M' \rceil} \qquad (1)$$

W represents the dimension (that is, the quantity of rows or the quantity of columns) of the first matrix, and M' represents the quantity of active terminal devices. For example, if a quantity (represented by M) of the plurality of terminal devices is 32, and a ratio (represented by $R_a$) of the quantity (represented by M') of active terminal devices to the quantity of the plurality of terminal devices is 0.25, the quantity of active terminal devices is 8. The terminal device 110 may determine, based on the foregoing expression (1), that the dimension W of the first matrix is 8.

In a possible implementation, the terminal device 110 may determine a real number field polarization matrix based on a Hadamard (Hadamard) matrix and the dimension of the first matrix. For example, the terminal device 110 may determine the real number field polarization matrix based on the following:

$$\mathbf{G}_W = \begin{bmatrix} 1 & 1 \\ 1 & -1 \end{bmatrix}^{\otimes \log_2 W} \qquad (2)$$

Gw represents the real number field polarization matrix, $\begin{bmatrix} 1 & 1 \\ 1 & -1 \end{bmatrix}$ represents the Hadamard matrix, and $\otimes$ represents a Kronecker product.

Further, the terminal device 110 may normalize the real number field polarization matrix to obtain an infinite field polarization matrix. For example, the terminal device 110 may normalize the real number field polarization matrix by using a normalization coefficient $\left(\dfrac{1}{\sqrt{2}}\right)^{\log_2 W}$. Further, the terminal device 110 may determine the infinite field polarization matrix as the first matrix.

FIG. 10 shows an example of a first matrix 1000 according to a possible implementation of this application. The first matrix 1000 is determined by using the method described with reference to FIG. 9. As shown in FIG. 10, the first matrix 1000 is a matrix with eight rows and eight columns.

In a possible implementation, a terminal device 110 may modulate sent data by using BPSK. In this implementation, a probability distribution of sent data of a plurality of terminal devices (including an active terminal device and a silent terminal device) may be represented by the following Table 1:

Table 1

| x | -1 | 0 | +1 |
|---|---|---|---|
| P(x) | $\dfrac{R_a}{2}$ | $1 - R_a$ | $\dfrac{R_a}{2}$ |

In Table 1, $R_a$ represents a ratio of a quantity of active terminal devices to a quantity of the plurality of terminal devices, and P(x) represents a probability P(x) with which the sent data is set to x, or represents that the probability of setting the sent data to x is P(x). For example, a probability with which the sent data is set to +1 or -1 is $\dfrac{R_a}{2}$, and a probability with which the sent data is set to 0 (that is, the terminal device is not to send the data) is $(1 - R_a)$.

As described above, in the implementation in which the receiver device first performs detection of the active terminal device and then performs channel decoding, the receiver device already knows which terminal device in the plurality of terminal devices is the active terminal device. Therefore, in this implementation, the terminal device 110 may update $R_a$ to 1, and update, based on updated $R_a$, the probability distribution in Table 1 to a probability distribution of sent data of the active terminal device shown in the following Table 2:

Table 2

| x | -1 | +1 |
|---|---|---|
| P(x) | 1 2 | 1 2 |

Alternatively, in the implementation in which the receiver device first performs detection of the active terminal device and then performs channel decoding, the probability distribution of the sent data of the active terminal device shown in Table 2 may be predefined.

In another possible implementation, the terminal device 110 may modulate the sent data by using higher-order modulation.

For example, if the terminal device 110 uses a higher-order modulation scheme 1, the probability distribution of the sent data of the plurality of terminal devices may be represented by the following Table 3. Correspondingly, the probability distribution of the sent data of the active terminal device may be represented by the following Table 4.

Table 3

| x | -A2 | -A1 | 0 | A1 | A2 |
|---|---|---|---|---|---|
| P(x) | 0.25 * Ra | 0.25 * Ra | 1-Ra | 0.25 * Ra | 0.25 * Ra |

Table 4

| x | -A2 | -A1 | A1 | A2 |
|---|---|---|---|---|
| P(x) | 0.25 | 0.25 | 0.25 | 0.25 |

For example, if the terminal device 110 uses a higher-order modulation scheme 2, the probability distribution of the sent data of the plurality of terminal devices may be represented by the following Table 5. Correspondingly, the probability distribution of the sent data of the active terminal device may be represented by the following Table 6.

Table 5

| x | -A3 | -A2 | -A1 | 0 | A1 | A2 | A3 |
|---|---|---|---|---|---|---|---|
| P(x) | 1/6 * Ra | 1/6* Ra | 1/6*Ra | 1-Ra | 1/6*Ra | 1/6*Ra | 1/6*Ra |

Table 6

| x | -A3 | -A2 | -A1 | A1 | A2 | A3 |
|---|---|---|---|---|---|---|
| P(x) | 1/6 | 1/6 | 1/6 | 1/6 | 1/6 | 1/6 |

For example, if the terminal device 110 uses a higher-order modulation scheme 3, the probability distribution of the sent data of the plurality of terminal devices may be represented by the following Table 7. Correspondingly, the probability distribution of the sent data of the active terminal device may be represented by the following Table 8.

Table 7

| x | -A4 | -A3 | -A2 | -A1 | 0 | A1 | A2 | A3 | A4 |
|---|---|---|---|---|---|---|---|---|---|
| P(x) | 1/8* Ra | 1/8* Ra | 1/8* Ra | 1/8 * Ra | 1-Ra | 1/8 * Ra | 1/8 * Ra | 1/8*Ra | 1/8*Ra |

Table 8

| x | -A4 | -A3 | - A2 | -A1 | A1 | A2 | A3 | A4 |
|---|---|---|---|---|---|---|---|---|
| P(x) | 1/8 | 1/8 | 1/8 | 1/8 | 1/8 | 1/8 | 1/8 | 1/8 |

In the foregoing Table 3 to Table 8, A1, A2, A3, and A4 respectively represent amplitudes corresponding to different modulated symbols. For example, two BPSK-modulated symbols have only one amplitude A1, where A1 may be 1. A modulated symbol corresponding to 4-level pulse amplitude modulation (4-level Pulse amplitude modulation, 4PAM) has two amplitudes A1 and A2, where A1 may be 1, and A2 may be 3. Other different modulation schemes may have more amplitude values of modulated symbols. Details are not described herein.

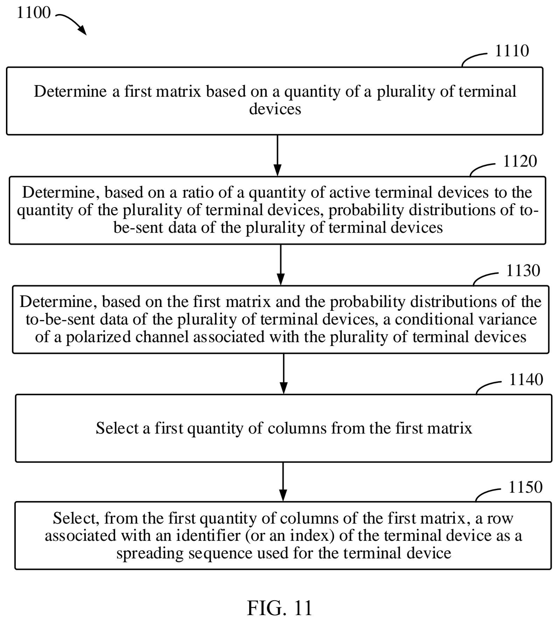

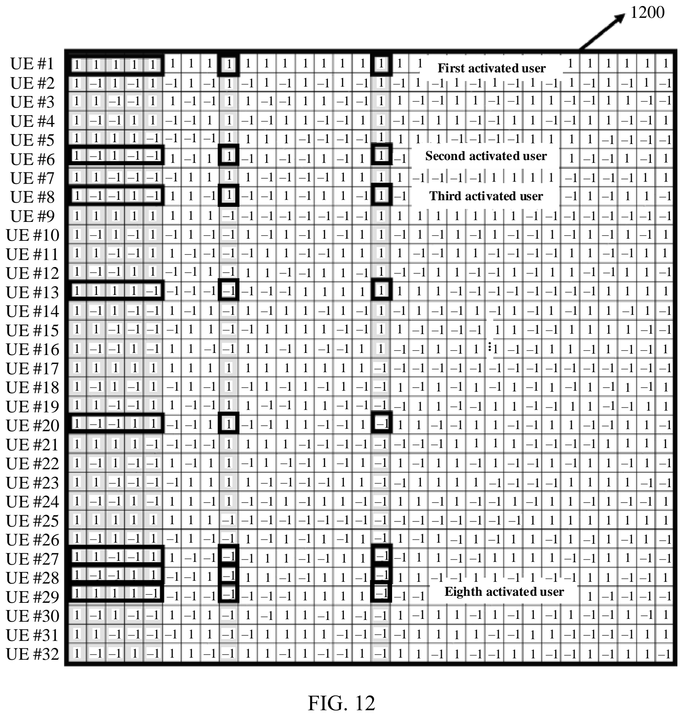

In a possible implementation, a length (represented by P) of a spreading sequence may be determined by a network device 120 based on an available time-frequency resource, and then the network device 120 provides the length of the spreading sequence for the terminal device 110. For example, assuming that eight active terminal devices in 32 terminal devices are to send data, and the network device 120 first performs detection of the active terminal devices and then performs channel decoding, a dimension W of the first matrix is 8. However, available time-frequency resources are only seven orthogonal sub-channels. In this case, data of the eight active terminal devices needs to be compressed into seven time-frequency resource blocks for transmission (that is, the length P of the spreading sequence is 7). For another example, if the receiver device performs detection of the active terminal device and channel decoding at the same time (which is to be described with reference to FIG. 11 and FIG. 12 subsequently), the dimension W of the first matrix is 32. However, available time-frequency resources are only seven orthogonal sub-channels. In this case, user data with a length of 32 needs to be compressed to user data with a length of 7. In the following descriptions, a ratio of the length of the first sequence to a quantity of columns (or rows) of the first matrix is also referred to as a "compression ratio" (represented by Rc).

In another possible implementation, the length of the spreading sequence may be predefined.

Return to FIG. 9. In block 920, the terminal device 110 determines, based on the first matrix and a probability distribution of sent data of the active terminal device, a conditional variance of a polarized channel associated with the active terminal device. For example, based on the first matrix 1000 shown in FIG. 10 and the probability distribution of the sent data of the active terminal device shown in Table 2, the terminal device 110 may determine that conditional variances of polarized channels associated with the active terminal device are respectively [0.1900, 0.1844, 0.1862, 0.0386, 0.1845, 0.0376, 0.0160, 0].

In block 930, the terminal device 110 selects a first quantity of columns from the first matrix as a spreading sequence used for the active terminal device. A conditional variance of the first quantity of columns is greater than a conditional variance of another column in the first matrix, and the first quantity is equal to the length (P) of the spreading sequence. In other words, the terminal device 110 may select P columns with a maximum conditional variance from the first matrix according to a criterion: maximum conditional variance, as the spreading sequence used for the active terminal device. For example, the terminal device 110 may select, from the first matrix 1000 shown in FIG. 10, seven columns (that is, first seven columns) with maximum conditional variances as the spreading sequence used for the active terminal device.

In block 940, the terminal device 110 selects, from the first quantity of columns of the first matrix, a row associated with an identifier (or an index) of the terminal device 110 as the spreading sequence used for the terminal device 110. For example, as shown in FIG. 10, a UE #1 may select first seven columns in a 1st row from the first matrix 1000 as a spreading sequence used for the UE #1; a UE #2 may select first seven columns in a 2nd row from the first matrix 1000 as a spreading sequence used for the UE #2; ...; and a UE #8 may select first seven columns in an 8th row from the first matrix 1000 as a spreading sequence used for the UE #8.

As described above, in another possible implementation, the receiver device (for example, the network device 120) may perform detection of the active terminal device and perform channel decoding on the demodulated data at the same time (hereinafter referred to as "Manner 2" for short). In this possible implementation, because the receiver device does not know which terminal device in the plurality of terminal devices is the active terminal device, the receiver device needs to detect which terminal device is silent and which terminal device is to send data (that is, the active terminal device) at the same time, and perform channel decoding on the demodulated data of the active terminal device. Therefore, the spreading sequence needs to be determined for all of the plurality of terminal devices. In the following descriptions, a process of determining the spreading sequence according to this possible implementation is described with reference to FIG. 11 and FIG. 12.

FIG. 11 is a flowchart of a method 1100 for determining a first sequence (that is, a spreading sequence) according to another possible implementation of this application. The method 1100 may be understood as an example implementation of the method 600, 800, or 805. In a possible implementation, the method 1100 may be implemented by the terminal device 110 in the example communication system 100, for example, may be implemented by a processor or a processing unit of the terminal device 110 in cooperation with another component (for example, a transceiver). Alternatively, the method 1100 may be implemented by the network device 120 in the example communication system 100, for example, may be implemented by a processor or a processing unit of the network device 120 in cooperation with another component (for example, a transceiver). In another possible implementation, the method 1100 may alternatively be implemented by another communication apparatus independent of the example communication system 100. In the following descriptions, the method 1100 is described by using the terminal device 110 as an example. In the method 1100, the terminal device 110 is an active terminal device.

In block 1110, the terminal device 110 determines a first matrix based on a quantity of a plurality of terminal devices.

In a possible implementation, the terminal device 110 may determine a dimension (represented by W) of the first matrix based on the quantity of the plurality of terminal devices. In an implementation in which the first matrix is a square matrix, the dimension of the first matrix is equal to a quantity of rows or a quantity of columns of the first matrix. For example, the terminal device 110 may determine the dimension of the first matrix based on the following:

$$W = 2^{\lceil \log_2 M \rceil} \qquad (3)$$

W represents the dimension (that is, the quantity of rows or the quantity of columns) of the first matrix, and M represents the quantity of the plurality of terminal devices. For example, the quantity (M) of the plurality of terminal devices is 32, and a ratio (represented by $R_a$) of a quantity (represented by M') of active terminal devices to the quantity of the plurality of terminal devices is 0.25. The terminal device 110 may determine, based on the foregoing expression (3), that the dimension W of the first matrix is 32.

In a possible implementation, the terminal device 110 may determine a real number field polarization matrix based on a Hadamard (hadamard) matrix and the dimension of the first matrix. For example, the terminal device 110 may determine the real number field polarization matrix based on the following:

$$\mathbf{G}_W = \begin{bmatrix} 1 & 1 \\ 1 & -1 \end{bmatrix}^{\otimes \log_2 W} \qquad (4)$$

$G_W$ represents the real number field polarization matrix, $\begin{bmatrix} 1 & 1 \\ 1 & -1 \end{bmatrix}$ represents the Hadamard matrix, and $\otimes$ represents a Kronecker product.

Further, the terminal device 110 may normalize the real number field polarization matrix to obtain an infinite field polarization matrix. For example, the terminal device 110 may normalize the real number field polarization matrix by using a normalization coefficient $\left(\frac{1}{\sqrt{2}}\right)^{\log_2 W}$. Further, the terminal device 110 may determine the infinite field polarization matrix as the first matrix.

FIG. 12 shows an example of a first matrix 1200 according to another possible implementation of this application. The first matrix 1200 is determined by using the method described with reference to FIG. 11. As shown in FIG. 12, the first matrix 1200 is a matrix with 32 rows and 32 columns. It should be noted that, all numbers in FIG. 12 further need to be multiplied by a normalization coefficient $(1/\sqrt{2})^5 = 0.1768$, and only symbols are reserved herein for clear display.

Return to FIG. 11. In block 1120, the terminal device 110 determines, based on the ratio ($R_a$) of the quantity of active terminal devices to the quantity of the plurality of terminal devices, a probability distribution of to-be-sent data of the plurality of terminal devices.

In a possible implementation, the terminal device 110 may modulate the sent data by using BPSK. In this implementation, the probability distribution of the to-be-sent data of the plurality of terminal devices (including the active terminal device and a silent terminal device) may be represented by the foregoing Table 1. When the ratio of the quantity of active terminal devices to the quantity of the plurality of terminal devices is 0.25 (that is, $R_a = 0.25$), the terminal device 110 may update Table 1 to the following Table 9 by using the value of $R_a$:

Table 9

| x | -1 | 0 | +1 |
|---|---|---|---|
| P(x) | 0.125 | 0.75 | 0.125 |

In another possible implementation, the terminal device 110 may modulate sent data by using higher-order modulation. In this implementation, the probability distribution of the to-be-sent data of the plurality of terminal devices may be represented by the foregoing Table 3, Table 5, or Table 7.

In a possible implementation, a length (represented by P) of the spreading sequence may be determined by the network device 120 based on an available time-frequency resource, and then the network device 120 provides the length of the spreading sequence for the terminal device 110. Alternatively, in another possible implementation, the length of the spreading sequence may be predefined.

In block 1130, the terminal device 110 determines, based on the first matrix and the probability distribution of the to-be-sent data of the plurality of terminal devices, a conditional variance of a polarized channel associated with the plurality of terminal devices. For example, based on the first matrix 1200 shown in FIG. 12 and the probability distribution of the sent data of the plurality of terminal devices shown in Table 9, the terminal device 110 may determine that conditional variances of polarized channels associated with the plurality of terminal devices are respectively:

0.250000000  0.2500235870.25013669 0.2500644590.2503153690.249584523
0.248081904  0.2274045330.2501383160.2473433840.2429282110.217601768
0.225246886  0.1748914490.1284227720.0235972880.2503521380.24072713
0.228588674  0.1875016960.1981798740.1398630120.1012153340.014901299
0.153502397  0.0889859570.0572774710.0053360450.0351868010.001581618
0.000478747  1.08E-10.

In block 1140, the terminal device 110 selects a first quantity of columns from the first matrix as a spreading sequence used for the active terminal device. A conditional variance of the first quantity of columns is greater than a conditional variance of another column in the first matrix, and the first quantity is equal to the length (P) of the spreading sequence. In other words, the terminal device 110 may select P columns with a maximum conditional variance from the first matrix according to a criterion: maximum conditional variance, as the spreading sequence used for the active terminal device. For example, the terminal device 110 may select, from the first matrix 1200 shown in FIG. 12, seven columns (to be specific, a 1st, 2nd, 3rd, 4th, 5th, 9th, and 17th columns) with maximum conditional variances as the spreading sequence used for the active terminal device.

In block 1150, the terminal device 110 selects, from the first quantity of columns of the first matrix, a row associated with an identifier (or an index) of the terminal device 110 as the spreading sequence used for the terminal device 110. For example, as shown in FIG. 12, a UE #1, a UE #6, a UE #8, a UE #13, a UE #20, a UE #27, a UE #28 and a UE #29 may be activated (in other words, 25% of M=32 terminal devices are active terminal devices). The UE #1 may select $1^{st}$ to $5^{th}$ columns, a $9^{th}$ column, and a $17^{th}$ column in a $1^{st}$ row from the first matrix 1200 as a spreading sequence used for the UE #1; the UE #6 may select $1^{st}$ to $5^{th}$ columns, a $9^{th}$ column, and a $17^{th}$ column in a $6^{th}$ row from the first matrix 1200 as a spreading sequence used for the UE #6; ...; and the UE #29 may select $1^{st}$ to $5^{th}$ columns, a $9^{th}$ column, and a $17^{th}$ column in a $29^{th}$ row from the first matrix 1200 as a spreading sequence used for the UE #29.

It may be understood that, with reference to FIG. 9 to FIG. 12, the foregoing describes that the terminal device 110 may select the P columns with a maximum conditional variance from the first matrix according to the criterion: maximum conditional variance, as the spreading sequence used for the active terminal device. However, this is merely an example. In another implementation, the terminal device 110 may select P columns with a maximum conditional variance from the first matrix according to a criterion: maximum conditional entropy, as the spreading sequence used for the active terminal device. The protection scope of this application is not limited in this aspect.

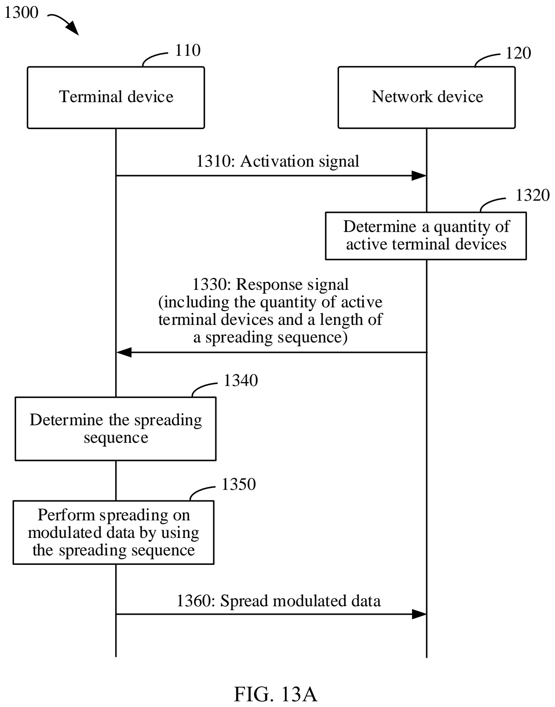

In the following descriptions, data sending processes according to possible implementations of this application are described with reference to FIG. 13A to FIG. 16.

FIG. 13A is a signaling exchange diagram of a data sending process 1300 according to a possible implementation of this application. For discussion purposes, the process 1300 is described with reference to various elements shown in FIG. 1. However, it should be understood that the process 1300 may alternatively be performed between a network device and a terminal device in any other communication scenario.

In general, in the process 1300, a receiver device (for example, a network device 120) first performs detection of an active terminal device in a plurality of terminal devices, and then performs channel decoding on demodulated data of the active terminal device. In addition, in the process 1300, it is assumed that only eight terminal devices in the plurality of terminal devices are active terminal devices.

As shown in FIG. 13A, a terminal device 110 sends an activation signal to the network device 120 in 1310. For example, the activation signal may indicate that the terminal device 110 is to send data to the network device 120. In addition, the activation signal may include an identifier or an index of the terminal device 110.

It may be understood that, for clarity, FIG. 13A shows only that a single terminal device 110 sends the activation signal to the network device 120. When there are eight active terminal devices in the plurality of (for example, 32) terminal devices, the eight active terminal devices may separately send an activation signal to the network device 120.

Correspondingly, the network device 120 receives the activation signal from the terminal device 110. For example, the network device 120 may receive activation signals from the eight active terminal devices. Further, the network device 120 determines a quantity (M') of active terminal devices based on the received activation signal in 1320.

Then, the network device 120 sends a response signal to the terminal device 110 serving as the active terminal device in 1330. The response signal is associated with the activation signal and includes the quantity (M') of active terminal devices and a length (P) of a spreading sequence. For example, M'=8, and P=7.

After receiving the response signal from the network device 120, the terminal device 110 determines the spreading sequence in 1340. For example, the terminal device 110 may determine the spreading sequence by using the foregoing method 600 or 900 described above.

Further, the terminal device 110 performs spreading on modulated data of the terminal device 110 by using the spreading sequence in 1350. Then, the terminal device 110 sends spread modulated data to the network device 120 in 1360.

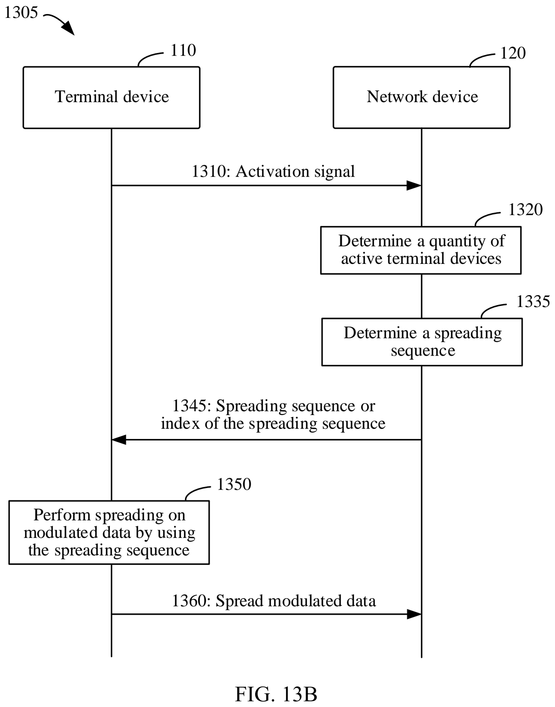

FIG. 13B is a signaling exchange diagram of a data sending process 1305 according to a possible implementation of this application. For discussion purposes, the process 1305 is described with reference to various elements shown in FIG. 1. However, it should be understood that the process 1305 may alternatively be performed between a network device and a terminal device in any other communication scenario.

In general, in the process 1305, a receiver device (for example, a network device 120) first performs detection of an active terminal device in a plurality of terminal devices, and then performs channel decoding on demodulated data of the active terminal device. In addition, in the process 1305, it is assumed that only eight terminal devices in the plurality of terminal devices are active terminal devices.

The process 1305 is similar to the process 1300. Specifically, actions 1310, 1320, 1350, and 1360 in the process 1305 are the same as the actions 1310, 1320, 1350, and 1360 in the process 1300. Therefore, details are not described again. Differences between the process 1305 and the process 1300 lie in actions 1335 and 1345.

As shown in FIG. 13B, the network device 120 determines a spreading sequence in 1335. For example, the network device 120 may determine the spreading sequence by using the method 805 or 900 described above. Further, the network device 120 sends the spreading sequence or an index of the spreading sequence to an active terminal device 110 in 1345. For example, the network device 120 may broadcast the spreading sequence or the index of the spreading sequence to the active terminal device 110.

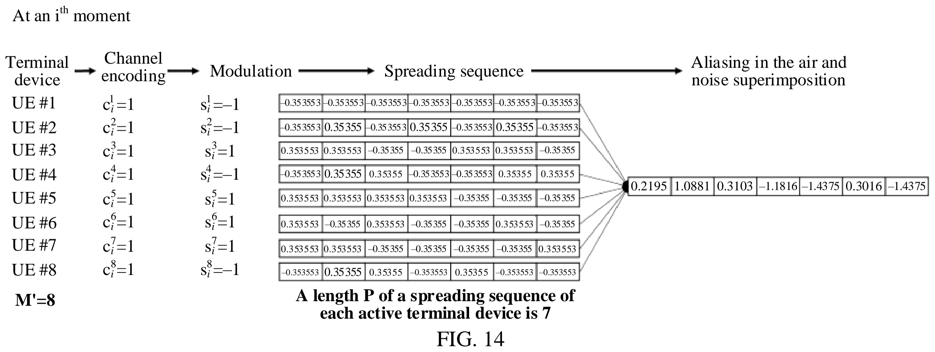

FIG. 14 is a diagram of sending data by an active terminal device according to a possible implementation of this application. In the implementation of FIG. 14, it is assumed that eight active terminal devices (for example, the UE #1 to the UE #8) in M terminal devices (for example, the UE #1, the UE #2, ..., and the UE #M in FIG. 1) are to send data. First, the UE #1 to the UE #8 separately perform channel encoding on to-be-sent binary data by using a channel encoder, to obtain codeword sequences (that is, {0, 1} sequences). For example, at an $i^{th}$ moment, a codeword $c_i^1$ to be sent by the UE #1 is 1; a codeword $c_i^2$ to be sent by the UE #2 is 1; a codeword $c_i^3$ to be sent by a UE #3 is 0; ...; and the like.

Then, the UE #1 to the UE #8 respectively perform modulation (for example, BPSK modulation) on the codeword sequences by using a modulator, to obtain modulated symbol sequences (for example, {-1, +1} sequences). For example, at the $i^{th}$ moment, a modulated symbol $s_i^1$ obtained by the UE #1 is -1; a modulated symbol $s_i^2$ obtained by the UE #2 is -1; a modulated symbol $s_i^3$ obtained by the UE #3 is 1; ...; and the like.

Further, the UE #1 to the UE #8 respectively perform spreading on modulated data by using respective spreading sequences. For example, spreading is performed by multiplying each modulated symbol by a respective spreading sequence. Finally, the UE #1 to the UE #8 respectively send spread data to an air interface for transmission. The spread data of the UE #1 to the spread data of the UE #8 are aliased in the air to form an aliased signal. The aliased signal may be superimposed with air interface noise.

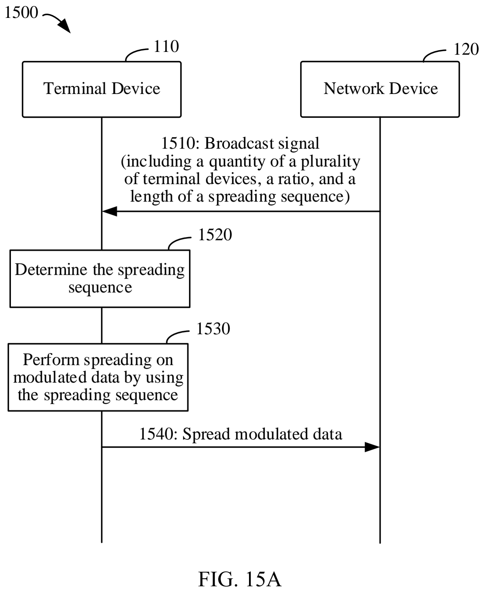

FIG. 15A is a signaling exchange diagram of a data sending process 1500 according to another possible implementation of this application. For discussion purposes, the process 1500 is described with reference to various elements shown in FIG. 1. However, it should be understood that the process 1500 may alternatively be performed between a network device and a terminal device in any other communication scenario.

In general, in the process 1500, a receiver device (for example, a network device 120) performs detection of an active terminal device and performs channel decoding on demodulated data at the same time. In addition, in the process 1500, it is assumed that only eight terminal devices in 32 terminal devices are active terminal devices.

As shown in FIG. 15A, the network device 120 sends a broadcast signal to a plurality of terminal devices in 1510. For example, the broadcast signal includes a quantity (M) of the plurality of terminal devices, a ratio (Ra) of a quantity of active terminal devices to the quantity of the plurality of terminal devices, and a length (P) of a spreading sequence. For example, M=32, Ra=0.25, and P=7.

Correspondingly, the plurality of terminal devices receive the broadcast signal from the network device 120. It may be understood that, for clarity, FIG. 15A shows only that a single terminal device 110 receives the broadcast signal from the network device 120. When there are the 32 terminal devices, the 32 terminal devices may separately receive the broadcast signal from the network device 120.

After receiving the broadcast signal from the network device 120, the terminal device 110 determines the spreading sequence in 1520. For example, the terminal device 110 may determine the spreading sequence by using the foregoing method 600 or 1000 described above.

Further, the terminal device 110 performs spreading on modulated data of the terminal device 110 by using the spreading sequence in 1530. Then, the terminal device 110 sends spread modulated data to the network device 120 in 1540.

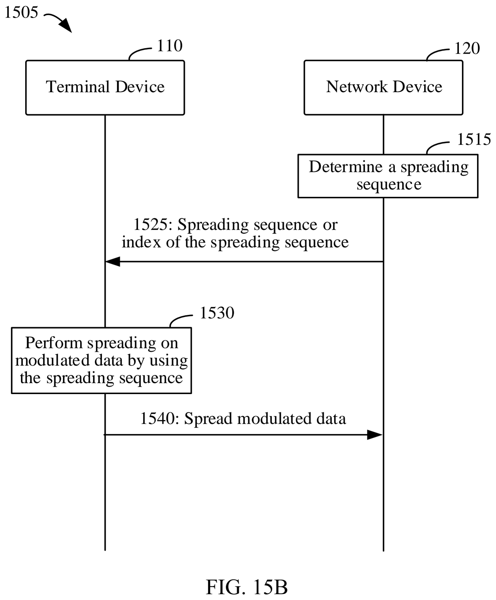

FIG. 15B is a signaling exchange diagram of a data sending process 1505 according to another possible implementation of this application. For discussion purposes, the process 1505 is described with reference to various elements shown in FIG. 1. However, it should be understood that the process 1505 may alternatively be performed between a network device and a terminal device in any other communication scenario.

In general, in the process 1505, a receiver device (for example, a network device 120) performs detection of an active terminal device and performs channel decoding on demodulated data at the same time. In addition, in the process 1505, it is assumed that only eight terminal devices in 32 terminal devices are active terminal devices.

The process 1505 is similar to the process 1500. Specifically, actions 1530 and 1540 in the process 1505 are the same as the actions 1530 and 1540 in the process 1500. Therefore, details are not described again. Differences between the process 1505 and the process 1500 lie in actions 1515 and 1525.

As shown in FIG. 15B, the network device 120 determines a spreading sequence in 1515. For example, the network device 120 may determine the spreading sequence by using the method 805 or 900 described above. Further, the network device 120 sends the spreading sequence or an index of the spreading sequence to an active terminal device 110 in 1525. For example, the network device 120 may broadcast the spreading sequence or the index of the spreading sequence to the active terminal device 110.

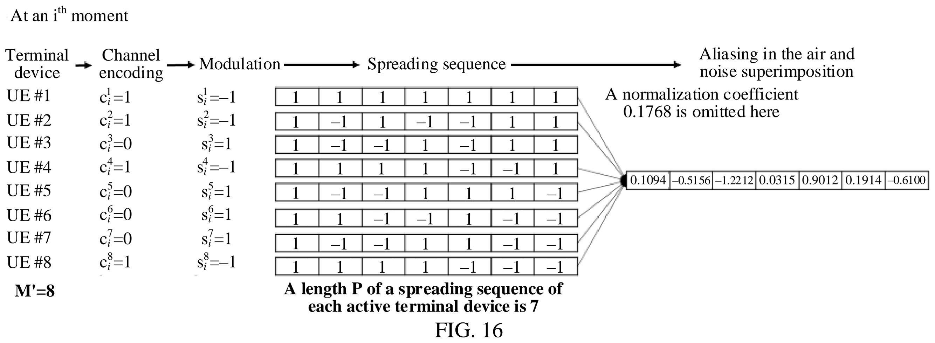

FIG. 16 is a diagram of sending data by an active terminal device according to another possible implementation of this application. In the implementation of FIG. 16, it is assumed that eight active terminal devices (for example, the UE #1 to the UE #8) in M terminal devices (for example, the UE #1, the UE #2, ..., and the UE #M in FIG. 1) are to send data. First, the UE #1 to the UE #8 separately perform channel encoding on to-be-sent binary data by using a channel encoder, to obtain codeword sequences (that is, {0, 1} sequences). For example, at an $i^{th}$ moment, a codeword $c_i^1$ to be sent by the UE #1 is 1; a codeword $c_i^2$ to be sent by the UE #2 is 1; a codeword $c_i^3$ to be sent by a UE #3 is 0; ...; and the like.

Then, the UE #1 to the UE #8 respectively perform modulation (for example, BPSK modulation) on the codeword sequences by using a modulator, to obtain modulated symbol sequences (for example, {-1, +1} sequences). For example, at the $i^{th}$ moment, a modulated symbol $s_i^1$ obtained by the UE #1 is -1; a modulated symbol $s_i^2$ obtained by the UE #2 is -1; a modulated symbol $s_i^3$ obtained by the UE #3 is 0; ...; and the like.

Further, the UE #1 to the UE #8 respectively perform spreading on modulated data by using respective spreading sequences. For example, spreading is performed by multiplying each modulated symbol by a respective spreading sequence. Finally, the UE #1 to the UE #8 respectively send spread data to an air interface for transmission. The spread data of the UE #1 to the spread data of the UE #8 are aliased in the air to form an aliased signal.

It should be noted that, all numbers in FIG. 16 further need to be multiplied by a normalization coefficient $(1/\sqrt{2})$ ^5=0.1768, and only symbols are reserved herein for clear display.

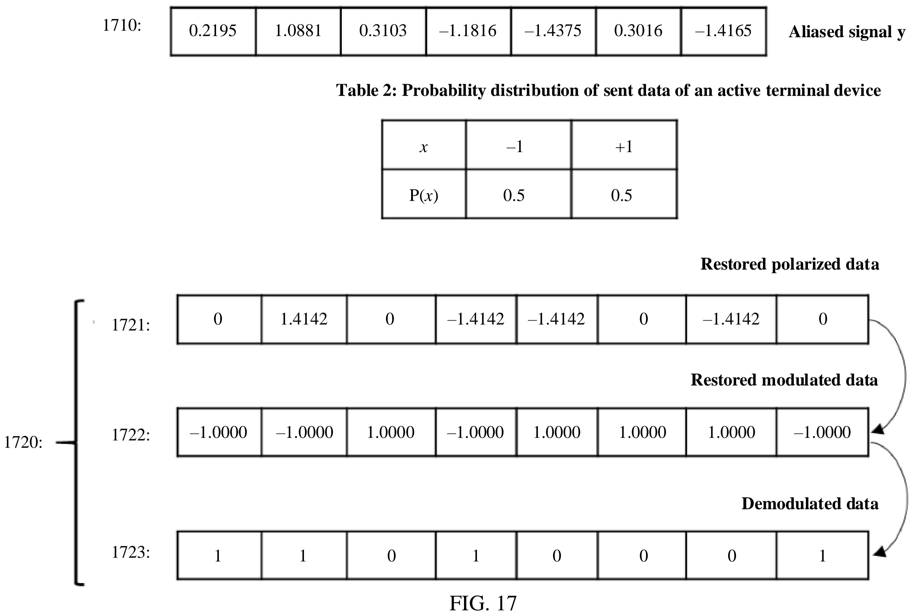

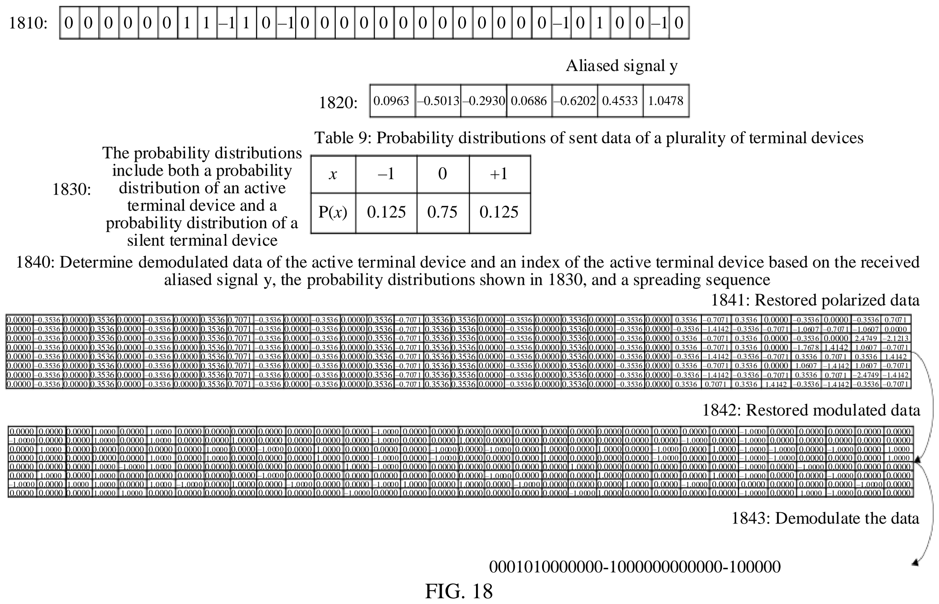

In the following descriptions, data sending processes according to possible implementations of this application are described with reference to FIG. 17 and FIG. 18.

FIG. 17 is a diagram of receiving data by a receiver device according to a possible implementation of this application. FIG. 17 is described below with reference to FIG. 14. In the implementation of FIG. 17, it is assumed that eight active terminal devices (for example, the UE #1 to the UE #8 in FIG. 14) in M (for example, 32) terminal devices send data. In addition, in the implementation of FIG. 17, the receiver device (for example, a network device 120) first performs detection of an active terminal device in a plurality of terminal devices, and then performs channel decoding on demodulated data of the active terminal device. In other words, before performing channel decoding, the network device 120 already knows which eight of the 32 terminal devices are active terminal devices.

As shown in FIG. 17, in 1710, the network device 120 receives an aliased signal (represented by y) from the active terminal devices. The aliased signal y includes a signal obtained by performing spreading on modulated data of the active terminal device by using a spreading sequence. For example, as described above with reference to FIG. 14, the UE #1 to the UE #8 respectively perform spreading on the modulated data by using the respective spreading sequences, and further respectively send the spread data to the air interface for transmission. The spread data of the UE #1 to the spread data of the UE #8 are aliased in the air to form the aliased signal y.

In 1720, the network device 120 determines the demodulated data of the active terminal device based on the received aliased signal, a probability distribution of sent data of the active terminal device (as shown in Table 2), and the spreading sequence.

Specifically, in 1721, the network device 120 may determine, based on the received aliased signal, polarized data associated with the sent data of the active terminal device. The polarized data is data generated through infinite field polarization performed on the sent data of the active terminal device. For example, an example of the polarized data is shown on the rightmost side in FIG. 3.

In a possible implementation, the network device 120 may perform infinite field successive cancellation list (successive cancellation list, SCL) decoding (also referred to as infinite field list decoding) on the received aliased signal, to determine the polarized data associated with the sent data of the active terminal device. In the SCL decoding, a maximum of list decoding paths may be reserved at a message position for list decoding. When list=1, the SCL decoding is degraded to infinite field (real number field) SC decoding. In the following descriptions, with reference to FIG. 3, an SCL decoding process is described by using list=1 as an example.

As shown in FIG. 3, eight blocks on the leftmost side represent modulated data of M=8 terminal devices. The eight terminal devices respectively perform spreading on the modulated data by using spreading sequences, to obtain spread modulated data. Eight blocks on the rightmost side in FIG. 3 represent the spread modulated data of the eight terminal devices. In the context of this application, the spread modulated data is also referred to as polarized data, to be specific, data generated through infinite field polarization performed on sent data of an active terminal device.

In infinite field polarization, eight pieces of polarized data on the rightmost side are obtained by performing spreading sequence transformation on data on the leftmost side in FIG. 3 that complies with a specific probability distribution (for example, a {-1, +1} uniform distribution). The eight pieces of polarized data on the rightmost side have eight different probability distributions, and therefore have different entropy. Generally, a higher position indicates higher conditional entropy and greater uncertainty; and a lower position indicates lower conditional entropy and less uncertainty. In the infinite field polarization, data at a high entropy position is set to a frozen position at which received (observed) data is placed; and data at a low entropy position is set to a message position, where the data at the low entropy position is obtained through infinite field SC decoding.

Inputs in the infinite field SC decoding are probability distributions (for example, {+1, -1} uniform distributions) of M (for example, M=8) pieces of data on the leftmost side in FIG. 3 and data at (M-K) known high entropy positions on the right side (for example, a value at a 1st position is 0, and a value at a 2nd position is $\sqrt{2}$ ). Outputs in the infinite field SC decoding are data at K low entropy positions (where M is an encoding length, K is a quantity of low entropy positions, and $1 \leq K \leq M$). To obtain data at a 3rd position to an 8th position on the rightmost side in FIG. 3, data at an $i$th ($i$=1, 2, ..., and M) position needs to be recursively calculated. When decoding is performed at an $i$th position, values at first ($i$-1) positions need to be known. If the data at the $i$th position is at a frozen position, the data at the $i$th position is directly set to an observation value. If the data at the $i$th position is at a message position, a probability distribution at the position is calculated according to a recursive operation criterion, and then a value with a maximum probability at the position is used as a decoding result at the position. The decoding starts from $i$=1 and ends when $i$=M. After data at all low entropy positions is obtained, all data on the rightmost side is determined based on the data at the (M-K) known high entropy positions.

It may be understood that, in the foregoing descriptions, the SCL decoding is merely used as an example to describe the process of determining the polarized data of the active terminal device. In another possible implementation, the network device 120 may determine the polarized data of the active terminal device by using any appropriate method. The protection scope of this application is not limited in this aspect.

Still refer to FIG. 17. In 1722, the network device 120 determines the modulated data of the active terminal device based on the spreading sequence and the polarized data associated with the sent data of the active terminal device. For example, the network device 120 may determine that at an $i$th moment, a modulated symbol $s_i^1$ of a UE #1 is -1; a modulated symbol $s_i^2$ of a UE #2 is -1; a modulated symbol $s_i^3$ of the UE #3 is 1; ...; and the like.

Further, in 1723, the network device 120 demodulates the modulated data of the active terminal device, to determine the sent data of the active terminal device.

FIG. 18 is a diagram of receiving data by a receiver device according to a possible implementation of this application. In the implementation of FIG. 18, it is assumed that eight active terminal devices (for example, a UE #7, a UE #8, a UE #9, a UE #10, a UE #12, a UE #26, a UE #28, and a UE #31) in M (for example, 32) terminal devices are to send data. In addition, in the implementation of FIG. 18, the receiver device (for example, a network device 120) performs detection of the active terminal device and channel decoding at the same time.

As shown in FIG. 18, modulated symbols of the UE #7, the UE #8, the UE #9, the UE #10, the UE #12, the UE #26, the UE #28, and the UE #31 at an $i$th moment are shown in 1810. The UE #7, the UE #8, the UE #9, the UE #10, the UE #12, the UE #26, the UE #28, and the UE #31 respectively use spreading sequences to perform spreading on modulated data, and then respectively send spread data to an air interface for transmission. The spread data of the UE #7, the spread data of the UE #8, the spread data of the UE #9, the spread data of the UE #10, the spread data of the UE #12, the spread data of the UE #26, the spread data of the UE #28, and the spread data of the UE #31 are aliased in the air to form an aliased signal y.

In 1820, the network device 120 receives the aliased signal (y) from the active terminal device. The aliased signal y includes a signal obtained by performing spreading on the modulated data of the active terminal device by using the spreading sequence.

In 1830, the network device 120 determines, based on a ratio (Ra) of a quantity of active terminal devices to a quantity of a plurality of terminal devices, a probability distribution of to-be-sent data of the plurality of terminal devices.

In a possible implementation, a terminal device 110 may modulate the sent data by using BPSK. In this implementation, the probability distribution of the to-be-sent data of the plurality of terminal devices may be represented by Table 1. When the ratio of the quantity of active terminal devices to the quantity of the plurality of terminal devices is 0.25 (that is, $R_a$ = 0.25), the terminal device 110 may update Table 1 to Table 9 by using a value of $R_a$, as shown in 1830.

In 1840, the network device 120 determines demodulated data of the active terminal device and an index of the active terminal device based on the received aliased signal, the probability distribution of the sent data of the plurality of terminal devices (as shown in 1830), and the spreading sequence.

Specifically, in 1841, the network device 120 may determine, based on the received aliased signal, polarized data associated with sent data of the active terminal device. The polarized data is data generated through infinite field polarization performed on the sent data of the active terminal device.

In a possible implementation, the network device 120 may perform infinite field SCL decoding on the received aliased signal, to determine the polarized data associated with the sent data of the active terminal device. For example, in the SCL decoding, list may be set to 8, in other words, a quantity of decoding paths is 8.

In 1842, the network device 120 determines the modulated data of the active terminal device based on the spreading sequence and the polarized data associated with the sent data of the active terminal device.

Further, in 1843, the network device 120 performs voting based on results of the eight decoding paths, and demodulates the modulated data of the active terminal device, to determine the sent data of the active terminal device.

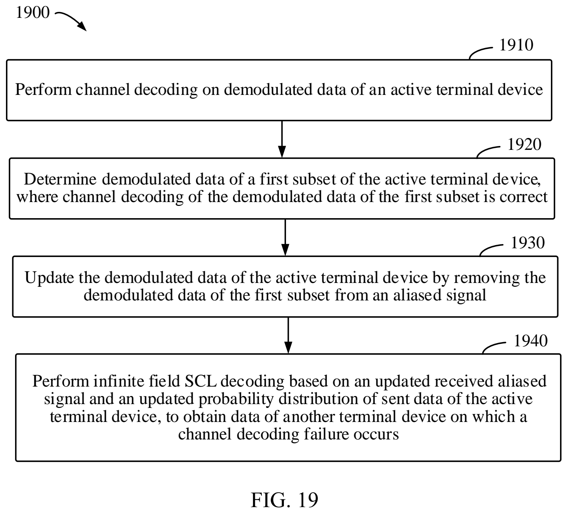

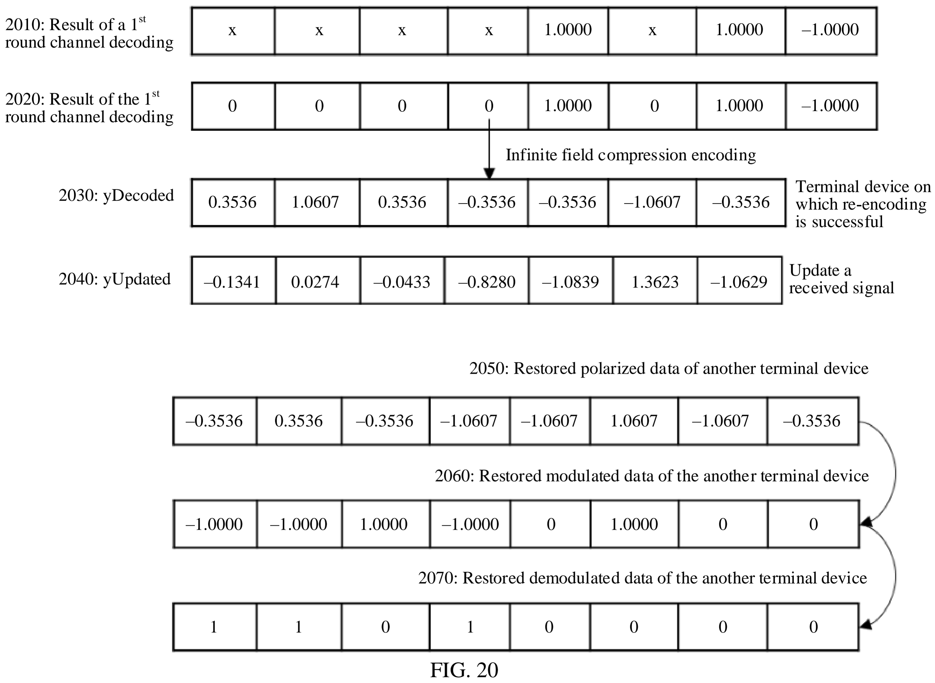

In a possible implementation, regardless of whether Manner 1 or Manner 2 is used, large iterative decoding may be used for the receiver device (for example, the network device 120) to improve channel decoding performance. A main idea of the large iterative decoding is as follows: if channel decoding of demodulated data of only some terminal devices in

a 1st round is correct, performing a next round of channel decoding, removing, from a received aliased signal in the next round of channel decoding, the demodulated data that is of the terminal devices and that is correctly decoded in the 1st round of channel decoding, and attempting to perform channel decoding again on demodulated data that is of a terminal device and that is incorrectly decoded in the previous round of channel decoding. Because interference is reduced, the demodulated data that is of the terminal device and that is incorrectly decoded in the previous round of channel decoding may be restored in the current round of channel decoding. In the following descriptions, with reference to FIG. 19 and FIG. 20, an example in which the network device 120 uses Manner 1 is used for describing a large iterative decoding procedure.

FIG. 19 is a flowchart of a channel decoding method 1900 according to a possible implementation of this application. In a possible implementation, the method 1900 may be implemented by the network device 120 in the example communication system 100, for example, may be implemented by a processor or a processing unit of the network device 120 in cooperation with another component (for example, a transceiver). In another possible implementation, the method 1900 may alternatively be implemented by another communication apparatus independent of the example communication system 100.

In block 1910, the network device 120 performs channel decoding on demodulated data of an active terminal device. For example, the network device 120 may perform channel decoding on the demodulated data of the active terminal device shown in 1723 in FIG. 17.

In block 1920, the network device 120 determines demodulated data of a first subset of the active terminal device, where channel decoding of the demodulated data of the first subset is correct. For example, as shown in 2010 in FIG. 20, in a 1st round of channel decoding process, CRC check on demodulated data of only a UE #5, a UE #7, and a UE #8 in active terminal devices UE #1 to UE #8 succeeds, and CRC check on demodulated data of other UEs fails. In this case, it is determined that channel decoding of the demodulated data of the UE #5, the UE #7, and the UE #8 is correct, and channel decoding of the demodulated data of the other UEs is incorrect (represented by x in 2010). In this case, the demodulated data of the first subset may include the demodulated data of the UE #5, the UE #7, and the UE #8.

In block 1930, the network device 120 updates the demodulated data of the active terminal device by removing the demodulated data of the first subset from an aliased signal. In other words, the network device 120 removes, from the aliased signal, data that is of a terminal device and that is correctly decoded, and continues to decode demodulated data of another terminal device.

In a possible implementation, the network device 120 may set a decoding result of a terminal device on which a channel decoding error occurs to 0, and retain a result of a terminal device on which channel decoding is successful, as shown in 2020 in FIG. 20.

Further, the network device 120 may perform infinite field compression encoding on the channel decoding result shown in 2020 in FIG. 20, to obtain a codeword yDecoded (as shown in 2030 in FIG. 20) of the terminal device on which the decoding is successful. For example, the network device 120 may multiply the channel decoding result shown in 2020 in FIG. 20 by the foregoing spreading sequence, to obtain the codeword yDecoded of the terminal device on which the decoding is successful.

Then, the network device 120 may update the received aliased signal by subtracting yDecoded from the received aliased signal y, to obtain an updated received aliased signal. As shown in 2040 in FIG. 20, the updated received aliased signal is represented by yUpdated.

Then, the network device 120 may update a probability distribution of sent data of the active terminal device. For example, the network device 120 may keep a probability distribution of sent data of the terminal device on which the channel decoding error occurs unchanged, and set the terminal device on which the channel decoding is successful to be silent. For example, the network device 120 may update a probability distribution of sent data of an active terminal device in Table 10 to that in Table 11.

Table 10

| $X_i$ | -1 | +1 | $i \in$ Terminal device on which a channel decoding error occurs |
|---|---|---|---|
| $P(x_i)$ | 0.5 | 0.5 | |

Table 11

| $x_j$ | 0 | $j \in$ Terminal device on which channel decoding is successful |
|---|---|---|
| $P(x_j)$ | 1 | |

Return to FIG. 19. In 1940, the network device 120 performs infinite field SCL decoding based on the updated received aliased signal yUpdated and the updated probability distribution of the sent data of the active terminal device (as shown in Table 11), to obtain data of another terminal device on which a channel decoding failure occurs.

For example, as shown in 2050 in FIG. 20, the network device 120 may determine, based on the updated received aliased signal yUpdated, polarized data associated with sent data of another active terminal device. For example, as described above with reference to FIG. 17, the network device 120 may perform SCL decoding on the updated received aliased signal, to determine the polarized data associated with the sent data of the another active terminal device.

In 2060, the network device 120 determines modulated data of the another active terminal device based on the spreading sequence and the polarized data associated with the sent data of the another active terminal device.

In 2070, the network device 120 demodulates the modulated data of the another active terminal device, to determine the sent data of the another active terminal device.

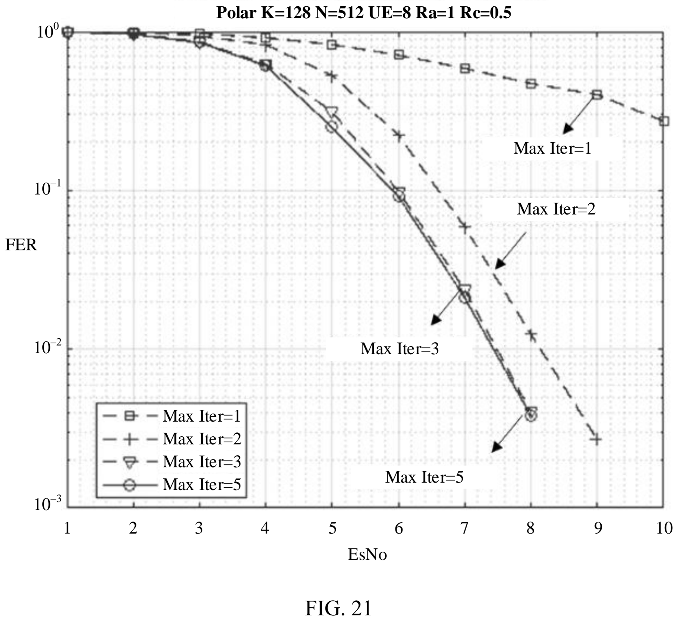

According to a large iterative decoding method in a possible implementation of this application, a smaller compression ratio (severer aliasing) indicates a larger large iteration gain, and a larger compression ratio (lighter aliasing) indicates a smaller large iteration gain. FIG. 21 shows a simulation result of large iterative decoding in a case of severe aliasing according to a possible implementation of this application. In FIG. 21, a horizontal coordinate EsNo represents a signal-to-noise power ratio. A larger EsNo indicates a better channel condition, and smaller noise power relative to signal power. A vertical coordinate FER indicates a frame error rate (Frame Error Rate). A lower FER corresponds to better error correction performance. "Max Iter" indicates the maximum quantity of iterations. In the implementation of FIG. 21, a receiver device first performs detection of an active terminal device in a plurality of terminal devices, and then performs channel decoding on demodulated data of the active terminal device. A quantity M of the plurality of terminal devices is 8, Ra=100%, and a compression ratio is 4/8 (in other words, transmission of data of eight terminal devices is performed on four orthogonal sub-channels, and consequently, aliasing is severe). In this case, a gain brought by using the large iterative decoding is apparent.

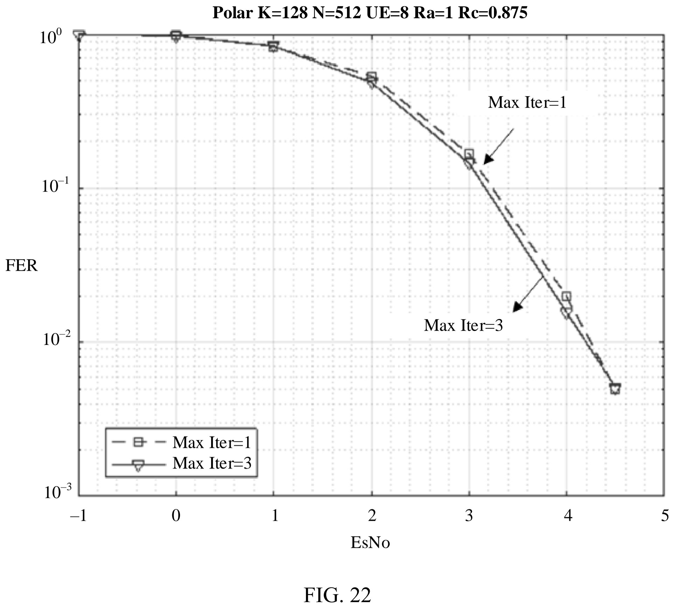

FIG. 22 shows a simulation result of large iterative decoding in a case of light aliasing according to another possible implementation of this application. In the implementation of FIG. 22, a receiver device first performs detection of an active terminal device in a plurality of terminal devices, and then performs channel decoding on demodulated data of the active terminal device. A quantity M of the plurality of terminal devices is 8, Ra=100%, and a compression ratio is 7/8 (in other words, transmission of data of eight terminal devices is performed on seven orthogonal sub-channels, so that aliasing is not severe). In this case, a gain brought by using the large iterative decoding is not apparent.

It may be understood that, although an existing infinite field polarization can be used for recursively decoding data at a compressed position, a soft value (Soft Values) of data on the left side cannot be generated for performing channel decoding on the demodulated data of the terminal device. For example, as shown in FIG. 3, the leftmost part is data obtained through channel encoding performed on the M terminal devices. To perform channel decoding, the receiver device needs to use soft values corresponding to M pieces of encoded data. The soft value may be a log likelihood ratio (LLR, Log likelihood Ratio), to be specific, a logarithm of a ratio of a probability that a data value is 0 to a probability that the data value is 1. For example, a soft value of x is $LLR(x)=\ln\dfrac{P(x=0)}{P(x=1)}$ .

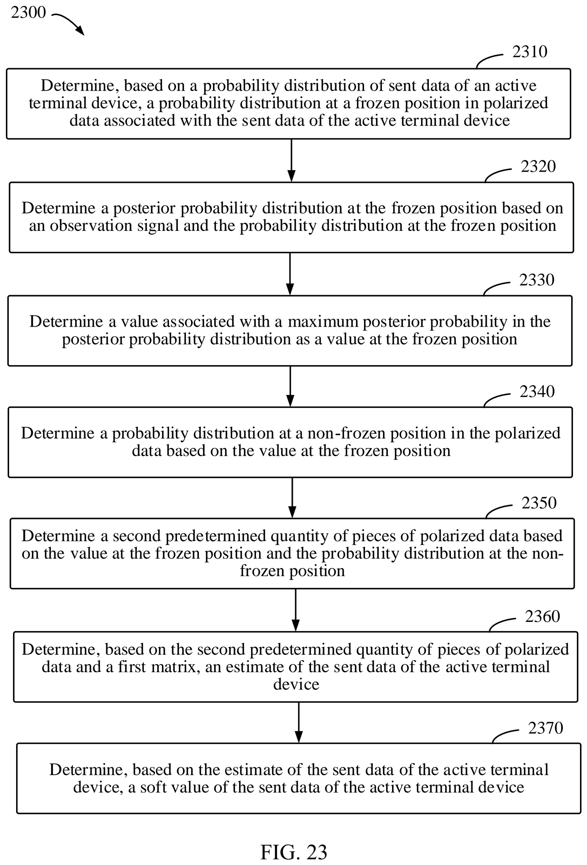

To resolve the foregoing problem, this application provides a solution for generating a soft value of encoded data of a terminal device based on infinite field list decoding, and the solution is described with reference to FIG. 23 and FIG. 4.

FIG. 23 is a flowchart of a method 2300 for generating a soft value of encoded data of a terminal device according to a possible implementation of this application. In a possible implementation, the method 2300 may be implemented by the network device 120 in the example communication system 100, for example, may be implemented by a processor or a processing unit of the network device 120 in cooperation with another component (for example, a transceiver). In another possible implementation, the method 2300 may alternatively be implemented by another communication apparatus independent of the example communication system 100.

In the following descriptions, the method 2300 is described by using two active terminal devices as an example.

In the method 2300, it is assumed that a quantity M of a plurality of terminal devices is 2. A receiver device (for example, the network device 120) receives data and performs channel decoding by using Manner 1. The two terminal devices are a UE #1 and a UE #2 and are 100% activated (that is, Ra=1), and a length P of a spreading sequence is 1. The UE #1 and the UE #2 each have data of 100 bits to be sent. A first matrix generated according to the method 800, 805, 900, or 1100 described above is $G_2=\dfrac{1}{\sqrt{2}}\begin{bmatrix}1 & 1\\ 1 & -1\end{bmatrix}$ , and conditional variances corresponding to two positions at which polarization is performed are [1.0000, 0.9886]. Therefore, P columns (that is, one column) with the maximum conditional variance in the first matrix $G_2$ may be selected to separately form spreading sequences of the UE #1 and the UE #2, where the spreading sequence of the UE #1 is $G_2(1,1)=\dfrac{1}{\sqrt{2}}$ , and the spreading sequence of the UE #2 is $G_2(2,1)=\dfrac{1}{\sqrt{2}}$ .

At an $i^{th}$ moment (i=1, 2, 3, ..., and 100), the terminal device multiplies an $i^{th}$ piece of data of the terminal device by the spreading sequence, and sends spread data to an air interface. Assuming that at the $i^{th}$ moment, modulated data of the UE #1 is -1, modulated data of the UE #2 is +1, and a signal received by the network device 120 is a signal aliasing noise and spread signals from the UE #1 and the UE #2, an aliased signal (also referred to as an observation signal) observed by the network device 120 is $r=-\frac{1}{\sqrt{2}}+\frac{1}{\sqrt{2}}+0.518=0.518$ (where it is assumed that the noise is 0.518 herein). The network device 120 determines, by performing infinite field list decoding on the observation signal, the data sent by the UE #1 and the UE #2 at the $i^{th}$ moment.

Specifically, as shown in FIG. 23, in block 2310, the network device 120 determines, based on a probability distribution of sent data of the active terminal device, a probability distribution at a frozen position in polarized data associated with the sent data of the active terminal device.

For example, it is assumed that the network device 120 knows that a probability distribution of sent data x of the UE #1 and the UE #2 is an equal probability distribution, as shown in the following Table 12.

Table 12

| x | -1 | +1 |
|---|-----|-----|
| P(x) | 0.5 | 0.5 |

For example, as described with reference to FIG. 4, a and b respectively represent the modulated data of the terminal devices UE #1 and UE #2, and c and d respectively represent the polarized data of the terminal devices UE #1 and UE #2 after the operation of the layer of basic polarization unit is performed on a and b. In other words, c and d respectively represent the polarized data associated with a and b. Based on Table 12, it may be determined that the modulated data a of the UE #1 is -1 at a probability of 0.5, and is 1 at a probability of 0.5; and the modulated data b of the UE #2 is -1 at a probability of 0.5, and is 1 at a probability of 0.5.

The network device 120 may determine a probability distribution at frozen positions in the polarized data of the UE #1 and the UE #2 based on Table 12. For example, the network device 120 may determine, based on Table 12, a probability distribution of a value c at a $1^{st}$ polarization position after polarization, as shown in the following Table 13:

Table 13

| c | -0.7071 | 0 | 0.7071 |
|---|---------|-----|--------|
| P(c) | 0.25 | 0.5 | 0.25 |

In block 2320, the network device 120 determines a posterior probability distribution at the frozen position based on the observation signal *r* and the probability distribution at the frozen position. For example, the network device 120 may determine a posterior probability distribution at the $1^{st}$ polarization position based on the observation signal *r* and the probability distribution at the $1^{st}$ polarization position shown in Table 13.

In block 2330, the network device 120 determines a value associated with the maximum posterior probability in the posterior probability distribution as a value at the frozen position. For example, the network device 120 may use a value with the maximum posterior probability as a value at the current $1^{st}$ polarization position.

It can be learned from the foregoing Table 13 that there are only three valid values for the $1^{st}$ polarization position: -0.7071, 0, and 0.7071. If there is no noise interference, the observation value is equal to the valid value. However, because *r* includes noise, and each value corresponds to a different prior probability, a value of c with the maximum likelihood probability (the closest to the observation value *r*) cannot be selected as the value at the $1^{st}$ polarization position according to a maximum likelihood probability criterion. Instead, a value of c with the maximum posterior probability needs to be selected as the value at the $1^{st}$ polarization position according to a maximum posterior probability criterion.

Specifically, the network device 120 determines, according to a maximum posterior probability formula

$$P(c|r) = \frac{P(r|c)P(c)}{P(r)} = \frac{P(r|c)P(c)}{\sum_{c\in\{-0.7071,0,-0.7071\}} P(r|c)P(c)}$$ , maximum posterior probabilities corresponding to all valid values, where the maximum posterior probabilities are respectively $P(c = -0.7071|r)=0.0820$, $P(c = 0|r)=0.5628$, and $P(c = 0.7071|r)=0.3551$. Because a corresponding posterior probability when *c* = 0 is the largest, the network device 120 may determine the value at the $1^{st}$ polarization position as *c* = 0.

If the selection is performed according to the maximum likelihood probability criterion, $P(r|c = -0.7071)=0.1142$, $P(r|c = 0)=0.3916$, and $P(r|c = 0.7071)=0.4942$. In this case, the likelihood probability is the largest when *c* = 0.7071, resulting in an incorrect result.

In block 2340, the network device 120 determines a probability distribution at a non-frozen position in the polarized data based on the value at the frozen position. For example, the network device 120 may calculate a probability

distribution at a 2nd position after polarization based on the value at the 1st polarization position and the probability distribution (for example, as shown in Table 12) of data of the two terminal devices before polarization.

For example, it has been determined, by using an operation in block 2330, that the value of c is 0, and when c=0 is given, there are two valid values, that is, $\{-\sqrt{2}, \sqrt{2}\}$, for d, and a probability of each value is shown in the following Table 14:

Table 14

| d | $-\sqrt{2}$ | $\sqrt{2}$ |
|---|---|---|
| P(d) | 0.5 | 0.5 |

In block 2350, the network device 120 determines a second predetermined quantity of pieces of polarized data based on the value at the frozen position and the probability distribution at the non-frozen position (that is, a message position). A sum of a first quantity and the second predetermined quantity is equal to a quantity of columns (or a quantity of rows, assuming that the first matrix is a square matrix) of the first matrix. For example, the network device 120 may determine a value at the message position based on the value at the frozen position and the probability distribution at the non-frozen position. The network device 120 may reserve a maximum of list values based on a size of list. It is assumed that a size of list of infinite field list decoding is 2, and a maximum of two values are reserved. Therefore, a value at the 2nd polarization position (that is, the message position) is $-\sqrt{2}$ or $\sqrt{2}$. In this case, list pieces of compressed polarized data are restored, and are respectively c=0, and $d=-\sqrt{2}$, or c = 0 and $d = \sqrt{2}$.

In block 2360, the network device 120 determines, based on the second predetermined quantity of pieces of polarized data and the first matrix, an estimate of the sent data of the active terminal device. For example, the network device 120 may separately perform infinite field polar coding on list estimation sequences. For example, the network device 120 may multiply the list estimation sequences by the first matrix, that is, $[\hat{a}, \hat{b}] = [c, d] \times \frac{1}{\sqrt{2}}\begin{bmatrix} 1 & 1 \\ 1 & -1 \end{bmatrix}$, to obtain $[\hat{a}, \hat{b}]$ = [-1,1] or $[\hat{a}, \hat{b}]$ = [1, -1].

In block 2370, the network device 120 determines, based on the estimate of the sent data of the active terminal device, a soft value of the sent data of the active terminal device. For example, according to list estimated values that are of the sent data of the UE #1 and the UE #2 and that are obtained in block 2360, a quantity of estimated values 1 is determined and represented by Num1, a quantity of estimated values -1 is represented by Num2, and a log likelihood ratio $\ln\left(\frac{Num1}{Num2}\right)$ is calculated as the soft value of the current terminal device. In this way, soft values of the sent data of the UE #1 and the UE #2 at the $i^{th}$ moment are obtained.

Similarly, for other moments i, i=1, 2, 3, ..., and 100, operations in blocks 2310 to 2370 are repeated, to obtain soft values of data of 100 bits sent by the UE #1 and the UE #2. Further, the soft values are sent to a channel decoder for channel decoding, so that message bits of the UE #1 and the UE #2 can be obtained.

It may be understood that the foregoing describes the method for generating the soft value of the encoded data of the terminal device by using the two active terminal devices as an example. In an implementation in which a quantity of active terminal devices is greater than 2, the soft value of the encoded data of the terminal device may be generated in a similar manner.

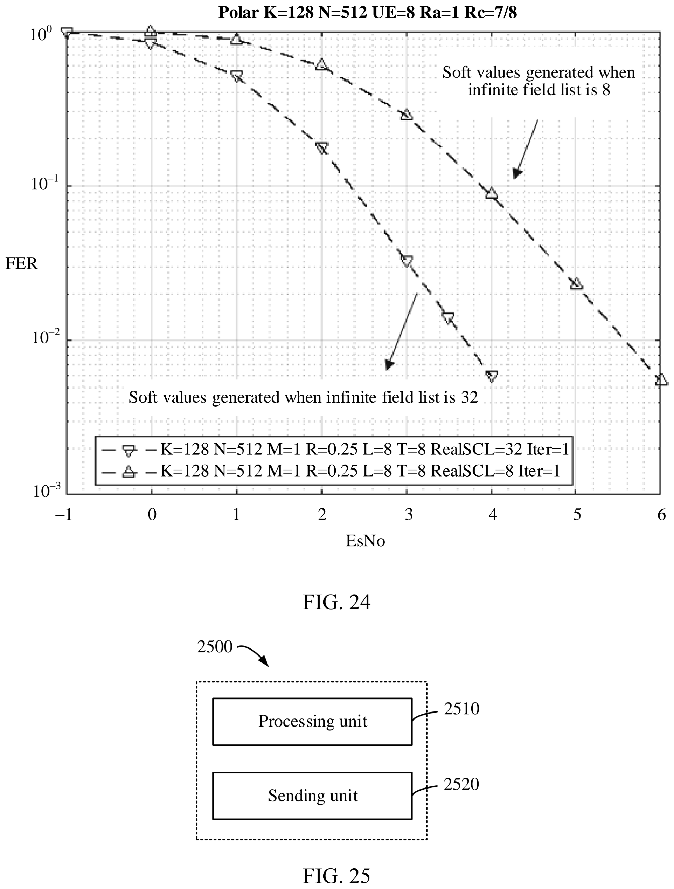

FIG. 24 shows a simulation result of generating a soft value based on infinite field list decoding according to a possible implementation of this application. In the implementation of FIG. 24, a quantity M of a plurality of terminal devices is 8, Ra=100%, and a compression ratio is 7/8. Decoding performance when list=8 and list=32 are used is compared. It can be found that larger list of the infinite field list decoding indicates a more reliable generated soft value.

FIG. 25 is a block diagram of a terminal device 2500 according to a possible implementation of this application. The terminal device 2500 may be implemented as a device or a chip in the device. The scope of this application is not limited in this aspect. The terminal device 2500 may include a plurality of units, configured to perform corresponding steps in the method 600 discussed in FIG. 6. The terminal device 2500 may be implemented as the terminal device 110 shown in FIG. 1 or a part of the terminal device 110.

As shown in FIG. 25, the terminal device 2500 includes a processing unit 2510 and a sending unit 2520.

The processing unit 2510 is configured to determine a first matrix based on a quantity of active terminal devices in a plurality of terminal devices or a quantity of the plurality of terminal devices. The processing unit 2510 is further configured to determine a first sequence based on the first matrix, a probability distribution of to-be-sent data of the plurality of terminal devices, and a predetermined length of the first sequence associated with the plurality of terminal devices. The processing unit 2510 is further configured to perform spreading on modulated data by using the first sequence.

The sending unit 2520 is configured to send spread modulated data to a network device.

In a possible implementation, the sending unit 2520 is further configured to send an activation signal to the network device. The terminal device 2500 includes a receiving unit. The receiving unit is configured to receive a response signal from the network device. The response signal is associated with the activation signal and includes the quantity of active terminal devices and the predetermined length of the first sequence. The processing unit 2510 is configured to determine the first matrix based on the quantity of active terminal devices.

In a possible implementation, the processing unit 2510 is configured to determine a dimension of the first matrix based on the quantity of active terminal devices.

In a possible implementation, the receiving unit is further configured to receive a broadcast signal from the network device. The broadcast signal includes the quantity of the plurality of terminal devices, a ratio of the quantity of active terminal devices to the quantity of the plurality of terminal devices, and the predetermined length of the first sequence. The processing unit 2510 is configured to determine the first matrix based on the quantity of the plurality of terminal devices.

In a possible implementation, the processing unit 2510 is configured to determine a dimension of the first matrix based on the quantity of the plurality of terminal devices.

In a possible implementation, the processing unit 2510 is configured to determine, based on the ratio of the quantity of active terminal devices to the quantity of the plurality of terminal devices, the probability distribution of the to-be-sent data of the plurality of terminal devices.

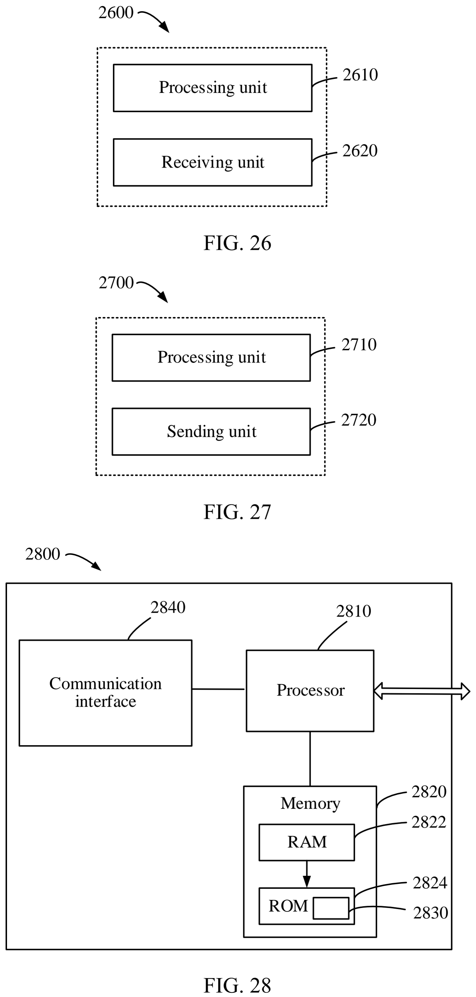

FIG. 26 is a block diagram of a network device 2600 according to a possible implementation of this application. The network device 2600 may be implemented as a device or a chip in the device. The scope of this application is not limited in this aspect. The network device 2600 may include a plurality of units, configured to perform corresponding steps in the method 800 discussed in FIG. 8A. The network device 2600 may be implemented as the network device 120 shown in FIG. 1 or a part of the network device 120.

As shown in FIG. 26, the network device 2600 includes a processing unit 2610 and a receiving unit 2620.

The processing unit 2610 is configured to determine a first matrix based on a quantity of active terminal devices in a plurality of terminal devices or a quantity of the plurality of terminal devices. The processing unit 2610 is further configured to determine a first sequence based on the first matrix, a probability distribution of to-be-sent data of the plurality of terminal devices, and a predetermined length of the first sequence associated with the plurality of terminal devices.

The receiving unit 2620 is configured to receive an aliased signal from the active terminal device. The aliased signal includes a signal obtained by performing spreading on modulated data of the active terminal device by using the first sequence.

The processing unit 2610 is configured to determine demodulated data of the active terminal device based on the aliased signal, the probability distribution of the to-be-sent data of the plurality of terminal devices, and the first sequence.

In a possible implementation, the receiving unit 2620 is further configured to receive an activation signal from the active terminal device. The processing unit 2610 is configured to determine the quantity of active terminal devices based on the activation signal. The network device 2600 further includes a sending unit. The sending unit is configured to send a response signal to the active terminal device. The response signal is associated with the activation signal and includes the quantity of active terminal devices and the predetermined length of the first sequence. The processing unit 2610 is configured to determine the first matrix based on the quantity of active terminal devices.

In a possible implementation, the processing unit 2610 is configured to determine a dimension of the first matrix based on the quantity of active terminal devices.

In a possible implementation, the network device 2600 further includes a sending unit. The sending unit is configured to send a broadcast signal to the plurality of terminal devices. The broadcast signal includes the quantity of the plurality of terminal devices, a ratio of the quantity of active terminal devices to the quantity of the plurality of terminal devices, and the predetermined length of the first sequence. The processing unit 2610 is configured to determine the first matrix based on the quantity of the plurality of terminal devices.

In a possible implementation, the processing unit 2610 is configured to determine a dimension of the first matrix based on the quantity of the plurality of terminal devices.

In a possible implementation, the processing unit 2610 is further configured to perform the following at least once: performing channel decoding on the demodulated data of the active terminal device; determining demodulated data of a first subset of the active terminal device, where channel decoding of the demodulated data of the first subset is correct; and updating the demodulated data of the active terminal device by removing the demodulated data of the first subset from the aliased signal.

FIG. 27 is a block diagram of a network device 2700 according to a possible implementation of this application. The network device 2700 may be implemented as a device or a chip in the device. The scope of this application is not limited in this aspect. The network device 2700 may include a plurality of units, configured to perform corresponding steps in the method 805 discussed in FIG. 8B. The network device 2700 may be implemented as the network device 120 shown in FIG. 1 or a part of the network device 120.

As shown in FIG. 27, the network device 2700 includes a processing unit 2710 and a sending unit 2720.

The processing unit 2710 is configured to determine a first matrix based on a quantity of active terminal devices in a plurality of terminal devices or a quantity of the plurality of terminal devices. The processing unit 2710 is further configured to determine a first sequence based on the first matrix, a probability distribution of to-be-sent data of the plurality of terminal devices, and a predetermined length of the first sequence associated with the plurality of terminal devices.

The sending unit 2720 is configured to send the first sequence to the active terminal device.

In a possible implementation, the network device 2700 further includes a receiving unit. The receiving unit is configured to receive an activation signal from the active terminal device. The processing unit 2710 is further configured to determine the quantity of active terminal devices based on the activation signal.

In a possible implementation, the network device 2700 further includes a receiving unit. The receiving unit is configured to receive an aliased signal from the active terminal device. The aliased signal includes a signal obtained by performing spreading on modulated data of the active terminal device by using the first sequence. The processing unit 2710 is further configured to determine demodulated data of the active terminal device based on the aliased signal and the probability distribution of the to-be-sent data of the plurality of terminal devices.

In a possible implementation, the processing unit 2710 is further configured to perform the following at least once: performing channel decoding on the demodulated data of the active terminal device; determining demodulated data of a first subset of the active terminal device, where channel decoding of the demodulated data of the first subset is correct; and updating the demodulated data of the active terminal device by removing the demodulated data of the first subset from the aliased signal.

FIG. 28 is a simplified block diagram of an example device 2800 suitable for implementing a possible implementation of this application. The device 2800 may be configured to implement the terminal device 110 or the network device 120 shown in FIG. 1A. As shown in the figure, the device 2800 includes one or more processors (or processing units) 2810, may further include one or more memories 2820 coupled to the processor 2810, and may further include a communication interface 2840 coupled to the processor 2810.

The communication interface 2840 may be configured to communicate with another device or apparatus, for example, send or receive data and/or a signal. The communication interface 2840 may have at least one communication interface for communication. The communication interface may include any interface necessary for communicating with another device. For example, the communication interface may be a transceiver, a circuit, a bus, a module, or another type of communication interface.

The processor 2810 may include but is not limited to at least one or more of the following: a general-purpose computer, a dedicated computer, a microcontroller, a digital signal controller (Digital Signal Processor, DSP), or a controller-based multi-core controller architecture. The device 2800 may have a plurality of processors, such as an application-specific integrated circuit chip, which in terms of time, belongs to a clock synchronized with a main processor.

The memory 2820 may include one or more non-volatile memories and one or more volatile memories. An example of the non-volatile memory includes but is not limited to at least one of the following: a read-only memory (Read-Only Memory, ROM) 2824, an erasable programmable read-only memory (Electrically Programmable Read-Only Memory, EPROM), a flash memory, a hard disk, a compact disc (Compact Disc, CD), a digital video disk (Digital Video Disk, DVD), or another magnetic storage and/or optical storage. An example of the volatile memory includes but is not limited to at least one of the following: a random access memory (Random Access Memory, RAM) 2822, or another volatile memory that does not persist for duration of a power failure.

A computer program 2830 includes computer-executable instructions performed by the associated processor 2810. The program 2830 may be stored in the ROM 2820. The processor 2810 may perform any suitable action and processing by loading the program 2830 into the RAM 2820.

Possible implementations of this application may be implemented by using the program 2830, so that the device 2800 can perform any process discussed with reference to FIG. 1 to FIG. 27. A possible implementation of this application may alternatively be implemented by hardware or a combination of software and hardware.

In some implementations, the program 2830 may be tangibly included in a computer-readable medium, and the computer-readable medium may be included in the device 2800 (for example, in the memory 2820) or another storage device that can be accessed by the device 2800. The program 2830 may be loaded from the computer-readable medium to the RAM 2822 for execution. The computer-readable medium may include any type of tangible non-volatile memory, for example, a ROM, an EPROM, a flash memory, a hard disk, a CD, or a DVD.

This application further provides a communication system. The communication system includes the terminal device 2500 and the network device 2600 or 2700 described above.

Usually, various possible implementations of this application may be implemented by hardware or a dedicated circuit, software, logic, or any combination thereof. Some aspects may be implemented by hardware, and other aspects may be implemented by firmware or software, and may be executed by a controller, a microprocessor, or another computing device. Although various aspects of possible implementations of this application are shown and described as block diagrams or flowcharts, or represented by using some other illustrations, it should be understood that the blocks, apparatuses, systems, technologies, or methods described in this specification may be implemented as non-limiting examples: hardware, software, firmware, dedicated circuits or logic, general-purpose hardware, controllers, other computing devices, or a combination thereof.

This application further provides at least one computer program product tangibly stored in a non-transitory computer-readable storage medium. The computer program product includes computer-executable instructions, such as instructions included in a program module, which are executed in a device on a target real or virtual processor to perform the processes/methods as described above with reference to FIG. 1 to FIG. 8. Usually, the program module includes a routine, a program, a library, an object, a class, a component, a data structure, or the like that executes a specific task or implements a specific abstract data type. In various possible implementations, functions of program modules may be combined or divided between the program modules as required. Machine-executable instructions for the program module may be executed locally or in a distributed device. In the distributed device, the program module may be locally located and located in a remote storage medium.

Program code for implementing the method of this application may be written in any combination of one or more programming languages. The program code may be provided to a processor or a controller of a general-purpose computer, a dedicated computer, or another programmable data processing apparatus, so that when the program code is executed by the processor or controller, the functions/operations specified in the flowchart and/or the block diagram are implemented. The program code may be completely executed on a machine, partially executed on a machine, partially executed on a machine as a stand-alone software package and partially executed on a remote machine, or completely executed on a remote machine or server.

In the context of this application, the machine-readable medium may be a tangible medium, and may include or store a program for use by an instruction execution system, an apparatus, or a device, or for use in combination with the instruction execution system, the apparatus, or the device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination of the foregoing content. A more specific example of the machine-readable storage medium may include an electrical connection based on one or more lines, a portable computer disk, a hard disk, a random access memory (RAM), a read-only memory (ROM), an erasable programmable read-only memory (EPROM or flash memory), an optical fiber, a compact disc read-only memory (CD-ROM), an optical storage device, a magnetic storage device, or any appropriate combination of the foregoing content.

In addition, although operations are described in a particular order, it should be understood as that it is required that the operations are performed in the shown particular order or in sequence, or it is required that all operations shown in the figures should be performed to achieve an expected result. In a specific environment, multi-task and parallel processing may be advantageous. Similarly, although details of several specific implementations are included in the foregoing discussions, these details should not be construed as limiting the scope of this application. Some features described in the context of separate possible implementations may alternatively be implemented in combination in a single implementation. On the contrary, various features described in the context of the single implementation may alternatively be implemented in a plurality of implementations separately or in any appropriate sub-combination.

Although the subject matter is described in a language specific to structural features and/or method logic actions, it should be understood that the subject matter defined in the appended claims is not necessarily limited to the particular features or actions described above. On the contrary, the particular features and actions described above are merely example forms for implementing the claims.

**Claims**

1. A communication method, comprising:

   determining a first matrix based on a quantity of active terminal devices in a plurality of terminal devices or a quantity of the plurality of terminal devices;
   determining a first sequence based on the first matrix, a probability distribution of to-be-sent data of the plurality of terminal devices, and a predetermined length of the first sequence associated with the plurality of terminal devices;
   performing spreading on modulated data by using the first sequence; and
   sending spread modulated data to a network device.

2. The method according to claim 1, further comprising:

sending an activation signal to the network device; and

receiving a response signal from the network device, wherein the response signal is associated with the activation signal and comprises the quantity of active terminal devices and the predetermined length of the first sequence; and

determining the first matrix comprises:

determining the first matrix based on the quantity of active terminal devices.

3. The method according to claim 2, wherein determining the first matrix comprises:
determining a dimension of the first matrix based on the quantity of active terminal devices.

4. The method according to claim 1, further comprising:

receiving a broadcast signal from the network device, wherein the broadcast signal comprises the quantity of the plurality of terminal devices, a ratio of the quantity of active terminal devices to the quantity of the plurality of terminal devices, and the predetermined length of the first sequence; and

determining the first matrix comprises:

determining the first matrix based on the quantity of the plurality of terminal devices.

5. The method according to claim 4, wherein determining the first matrix comprises:
determining a dimension of the first matrix based on the quantity of the plurality of terminal devices.

6. The method according to claim 4 or 5, wherein determining the first sequence comprises:
determining, based on the ratio of the quantity of active terminal devices to the quantity of the plurality of terminal devices, the probability distribution of the to-be-sent data of the plurality of terminal devices.

7. A communication method, comprising:

determining a first matrix based on a quantity of active terminal devices in a plurality of terminal devices or a quantity of the plurality of terminal devices;

determining a first sequence based on the first matrix, a probability distribution of to-be-sent data of the plurality of terminal devices, and a predetermined length of the first sequence associated with the plurality of terminal devices;

receiving an aliased signal from the active terminal device, wherein the aliased signal comprises a signal obtained by performing spreading on modulated data of the active terminal device by using the first sequence; and

determining demodulated data of the active terminal device based on the aliased signal, the probability distribution of the to-be-sent data of the plurality of terminal devices, and the first sequence.

8. The method according to claim 7, further comprising:

receiving an activation signal from the active terminal device;

determining the quantity of active terminal devices based on the activation signal; and

sending a response signal to the active terminal device, wherein the response signal is associated with the activation signal and comprises the quantity of active terminal devices and the predetermined length of the first sequence; and

determining the first matrix comprises:

determining the first matrix based on the quantity of active terminal devices.

9. The method according to claim 8, wherein determining the first matrix comprises:
determining a dimension of the first matrix based on the quantity of active terminal devices.

10. The method according to claim 7, further comprising:

sending a broadcast signal to the plurality of terminal devices, wherein the broadcast signal comprises the quantity of the plurality of terminal devices, a ratio of the quantity of active terminal devices to the quantity of the plurality of terminal devices, and the predetermined length of the first sequence; and

determining the first matrix comprises:

determining the first matrix based on the quantity of the plurality of terminal devices.

**EP 4 693 914 A1**

11. The method according to claim 10, wherein determining the first matrix comprises:
determining a dimension of the first matrix based on the quantity of the plurality of terminal devices.

12. The method according to claim 7, further comprising the following which is performed at least once:

performing channel decoding on the demodulated data of the active terminal device;
determining demodulated data of a first subset of the active terminal device, wherein channel decoding of the demodulated data of the first subset is correct; and
updating the demodulated data of the active terminal device by removing the demodulated data of the first subset from the aliased signal.

13. A communication device, comprising:

a processor; and
a memory, comprising computer program code, wherein
the computer program code, when run by the processor, causes the method according to any one of claims 1 to 6 or 7 to 12 to be performed.

14. A computer-readable storage medium, wherein the computer-readable storage medium stores a computer program, and when the computer program is executed by a processor, the method according to any one of claims 1 to 6 or 7 to 12 is implemented.

15. A chip, wherein the chip comprises a processing circuit, and the processing circuit is configured to cause the method according to any one of claims 1 to 6 or 7 to 12 to be performed.

16. A computer program product, wherein the computer program product comprises instructions, and the computer program product is configured to: when the instructions are executed by a device, cause the device to perform the method according to any one of claims 1 to 6 or 7 to 12.

27

FIG. 1

Transmitter device

| Source | → | Source encoding | → | Channel encoding | → | Modulation | → | Channel |

Receiver device

| Demodulation | → | Channel decoding | → | Source decoding | → | Destination |

FIG. 2

FIG. 3

FIG. 4

FIG. 5

600

610

Determine a first matrix based on a quantity of active terminal devices in a plurality of terminal devices or a quantity of the plurality of terminal devices

620

Determine a first sequence based on the first matrix, probability distributions of to-be-sent data of the plurality of terminal devices, and a predetermined length of the first sequence associated with the plurality of terminal devices

630

Perform spreading on modulated data by using the first sequence

640

Send spread modulated data to a network device

FIG. 6

| UE #1 data | | Encoder | | Modulator | | Spreading sequence |
|---|---|---|---|---|---|---|

| A UE #2 is silent |
|---|

| UE #3 data | | Encoder | | Modulator | | Spreading sequence |
|---|---|---|---|---|---|---|

| A UE #4 is silent |
|---|

⋮

| A UE #M is silent |
|---|

**FIG. 7**

800

810

Determine a first matrix based on a quantity of active terminal devices in a plurality of terminal devices or a quantity of the plurality of terminal devices

820

Determine a first sequence based on the first matrix, probability distributions of to-be-sent data of the plurality of terminal devices, and a predetermined length of the first sequence associated with the plurality of terminal devices

830

Receive an aliased signal from the active terminal device, where the aliased signal includes a signal obtained by performing spreading on modulated data of the active terminal device by using the first sequence

840

Determine demodulated data of the active terminal device based on the aliased signal, the probability distributions of the to-be-sent data of the plurality of terminal devices, and the first sequence

FIG. 8A

805

815

Determine a first matrix based on a quantity of active terminal devices in a plurality of terminal devices or a quantity of the plurality of terminal devices

825

Determine a first sequence based on the first matrix, probability distributions of to-be-sent data of the plurality of terminal devices, and a predetermined length of the first sequence associated with the plurality of terminal devices

835

Send the first sequence to the active terminal device

FIG. 8B

900 ⌐

910

Determine a first matrix based on a quantity of active terminal devices in a plurality of terminal devices

920

Determine, based on the first matrix and a probability distribution of sent data of the active terminal device, a conditional variance of a polarized channel associated with the active terminal device

930

Select a first quantity of columns from the first matrix

940

Select, from the first quantity of columns of the first matrix, a row associated with an identifier (or an index) of the terminal device as a spreading sequence used for the terminal device

FIG. 9

EP 4 693 914 A1

1010

1000

| | | | | | | | |
|---|---|---|---|---|---|---|---|
| UE #1 | 0.353553 | 0.353553 | 0.353553 | 0.353553 | 0.353553 | 0.353553 | 0.353553 | 0.353553 |
| UE #2 | 0.353553 | −0.35355 | 0.353553 | −0.35355 | 0.353553 | −0.35355 | 0.353553 | −0.35355 |
| UE #3 | 0.353553 | 0.353553 | −0.35355 | −0.35355 | 0.353553 | 0.353553 | −0.35355 | −0.35355 |
| UE #4 | 0.353553 | −0.35355 | −0.35355 | 0.353553 | 0.353553 | −0.35355 | −0.35355 | 0.353553 |
| UE #5 | 0.353553 | 0.353553 | 0.353553 | 0.353553 | −0.35355 | −0.35355 | −0.35355 | −0.35355 |
| UE #6 | 0.353553 | −0.35355 | 0.353553 | −0.35355 | −0.35355 | 0.353553 | −0.35355 | 0.353553 |
| UE #7 | 0.353553 | 0.353553 | −0.35355 | −0.35355 | −0.35355 | −0.35355 | 0.353553 | 0.353553 |
| UE #8 | 0.353553 | −0.35355 | −0.35355 | 0.353553 | −0.35355 | 0.353553 | 0.353553 | −0.35355 |
| | 0.1900 | 0.1844 | 0.1862 | 0.0386 | 0.1845 | 0.0376 | 0.0160 | 0 |

FIG. 10

1100

1110

Determine a first matrix based on a quantity of a plurality of terminal devices

1120

Determine, based on a ratio of a quantity of active terminal devices to the quantity of the plurality of terminal devices, probability distributions of to-be-sent data of the plurality of terminal devices

1130

Determine, based on the first matrix and the probability distributions of the to-be-sent data of the plurality of terminal devices, a conditional variance of a polarized channel associated with the plurality of terminal devices

1140

Select a first quantity of columns from the first matrix

1150

Select, from the first quantity of columns of the first matrix, a row associated with an identifier (or an index) of the terminal device as a spreading sequence used for the terminal device

FIG. 11

FIG. 12

FIG. 13A

1305

110
Terminal device

120
Network device

1310: Activation signal

1320
Determine a quantity of active terminal devices

1335
Determine a spreading sequence

1345: Spreading sequence or index of the spreading sequence

1350
Perform spreading on modulated data by using the spreading sequence

1360: Spread modulated data

FIG. 13B

At an $i^{th}$ moment

Terminal device → Channel encoding → Modulation → Spreading sequence → Aliasing in the air and noise superimposition

| | Channel encoding | Modulation | Spreading sequence | | | | | | |
|---|---|---|---|---|---|---|---|---|---|
| UE #1 | $c_i^1=1$ | $s_i^1=-1$ | -0.353553 | -0.353553 | -0.353553 | -0.353553 | -0.353553 | -0.353553 | -0.353553 |
| UE #2 | $c_i^2=1$ | $s_i^2=-1$ | -0.353553 | 0.35355 | -0.353553 | 0.35355 | -0.353553 | 0.35355 | -0.353553 |
| UE #3 | $c_i^3=1$ | $s_i^3=1$ | 0.353553 | 0.353553 | -0.35355 | -0.35355 | 0.353553 | 0.353553 | -0.35355 |
| UE #4 | $c_i^4=1$ | $s_i^4=-1$ | -0.353553 | 0.35355 | 0.35355 | -0.353553 | -0.353553 | 0.35355 | 0.35355 |
| UE #5 | $c_i^5=1$ | $s_i^5=1$ | 0.353553 | 0.353553 | 0.353553 | 0.353553 | -0.35355 | -0.35355 | -0.35355 |
| UE #6 | $c_i^6=1$ | $s_i^6=1$ | 0.353553 | -0.35355 | 0.353553 | -0.35355 | -0.35355 | 0.353553 | -0.35355 |
| UE #7 | $c_i^7=1$ | $s_i^7=1$ | 0.353553 | 0.353553 | -0.35355 | -0.35355 | -0.35355 | -0.35355 | 0.353553 |
| UE #8 | $c_i^8=1$ | $s_i^8=-1$ | -0.353553 | 0.35355 | 0.35355 | -0.353553 | 0.35355 | -0.353553 | -0.353553 |

Aliasing result: | 0.2195 | 1.0881 | 0.3103 | -1.1816 | -1.4375 | 0.3016 | -1.4375 |

**M'=8**

**A length P of a spreading sequence of each active terminal device is 7**

FIG. 14

1500

110

**Terminal Device**

120

**Network Device**

1510: Broadcast signal
(including a quantity of a plurality
of terminal devices, a ratio, and a
length of a spreading sequence)

1520

Determine the spreading
sequence

1530

Perform spreading on
modulated data by using
the spreading sequence

1540: Spread modulated data

FIG. 15A

1505

110
Terminal Device

120
Network Device

1515
Determine a spreading sequence

1525: Spreading sequence or index of the spreading sequence

1530
Perform spreading on modulated data by using the spreading sequence

1540: Spread modulated data

FIG. 15B

At an $i^{th}$ moment

Terminal device → Channel encoding → Modulation → Spreading sequence → Aliasing in the air and noise superimposition

| | | | Spreading sequence | | | | | | |
|---|---|---|---|---|---|---|---|---|---|
| UE #1 | $c_i^1=1$ | $s_i^1=-1$ | 1 | 1 | 1 | 1 | 1 | 1 | 1 |
| UE #2 | $c_i^2=1$ | $s_i^2=-1$ | 1 | −1 | 1 | −1 | −1 | 1 | 1 |
| UE #3 | $c_i^3=0$ | $s_i^3=1$ | 1 | −1 | −1 | 1 | −1 | 1 | 1 |
| UE #4 | $c_i^4=1$ | $s_i^4=-1$ | 1 | 1 | 1 | 1 | −1 | −1 | 1 |
| UE #5 | $c_i^5=0$ | $s_i^5=1$ | 1 | −1 | −1 | 1 | 1 | 1 | −1 |
| UE #6 | $c_i^6=0$ | $s_i^6=1$ | 1 | 1 | −1 | −1 | 1 | −1 | −1 |
| UE #7 | $c_i^7=0$ | $s_i^7=1$ | 1 | −1 | −1 | 1 | 1 | −1 | −1 |
| UE #8 | $c_i^8=1$ | $s_i^8=-1$ | 1 | 1 | 1 | 1 | −1 | −1 | −1 |

**M'=8**

A normalization coefficient 0.1768 is omitted here

| 0.1094 | −0.5156 | −1.2212 | 0.0315 | 0.9012 | 0.1914 | −0.6100 |
|---|---|---|---|---|---|---|

**A length P of a spreading sequence of each active terminal device is 7**

FIG. 16

EP 4 693 914 A1

EP 4 693 914 A1

1710: | 0.2195 | 1.0881 | 0.3103 | −1.1816 | −1.4375 | 0.3016 | −1.4165 | **Aliased signal y**

**Table 2: Probability distribution of sent data of an active terminal device**

| $x$ | −1 | +1 |
|---|---|---|
| P($x$) | 0.5 | 0.5 |

**Restored polarized data**

1721: | 0 | 1.4142 | 0 | −1.4142 | −1.4142 | 0 | −1.4142 | 0 |

**Restored modulated data**

1720: 1722: | −1.0000 | −1.0000 | 1.0000 | −1.0000 | 1.0000 | 1.0000 | 1.0000 | −1.0000 |

**Demodulated data**

1723: | 1 | 1 | 0 | 1 | 0 | 0 | 0 | 1 |

FIG. 17

EP 4 693 914 A1

1810: | 0 | 0 | 0 | 0 | 0 | 0 | 1 | 1 | –1 | 1 | 0 | –1 | 0 | 0 | 0 | 0 | 0 | 0 | 0 | 0 | 0 | 0 | 0 | 0 | 0 | 0 | –1 | 0 | 1 | 0 | 0 | –1 | 0 |

Aliased signal y

1820: | 0.0963 | –0.5013 | –0.2930 | 0.0686 | –0.6202 | 0.4533 | 1.0478 |

Table 9: Probability distributions of sent data of a plurality of terminal devices

1830: The probability distributions include both a probability distribution of an active terminal device and a probability distribution of a silent terminal device

| $x$ | –1 | 0 | +1 |
|---|---|---|---|
| $P(x)$ | 0.125 | 0.75 | 0.125 |

1840: Determine demodulated data of the active terminal device and an index of the active terminal device based on the received aliased signal y, the probability distributions shown in 1830, and a spreading sequence

1841: Restored polarized data

1842: Restored modulated data

1843: Demodulate the data

0001010000000-1000000000000-100000

FIG. 18

1900

1910

Perform channel decoding on demodulated data of an active terminal device

1920

Determine demodulated data of a first subset of the active terminal device, where channel decoding of the demodulated data of the first subset is correct

1930

Update the demodulated data of the active terminal device by removing the demodulated data of the first subset from an aliased signal

1940

Perform infinite field SCL decoding based on an updated received aliased signal and an updated probability distribution of sent data of the active terminal device, to obtain data of another terminal device on which a channel decoding failure occurs

FIG. 19

2010: Result of a 1$^{st}$
round channel decoding

| x | x | x | x | 1.0000 | x | 1.0000 | −1.0000 |
|---|---|---|---|--------|---|--------|---------|

2020: Result of the 1$^{st}$
round channel decoding

| 0 | 0 | 0 | 0 | 1.0000 | 0 | 1.0000 | −1.0000 |
|---|---|---|---|--------|---|--------|---------|

Infinite field compression encoding

2030: yDecoded

| 0.3536 | 1.0607 | 0.3536 | −0.3536 | −0.3536 | −1.0607 | −0.3536 |
|--------|--------|--------|---------|---------|---------|---------|

Terminal device on
which re-encoding
is successful

2040: yUpdated

| −0.1341 | 0.0274 | −0.0433 | −0.8280 | −1.0839 | 1.3623 | −1.0629 |
|---------|--------|---------|---------|---------|--------|---------|

Update a
received signal

2050: Restored polarized data of another terminal device

| −0.3536 | 0.3536 | −0.3536 | −1.0607 | −1.0607 | 1.0607 | −1.0607 | −0.3536 |
|---------|--------|---------|---------|---------|--------|---------|---------|

2060: Restored modulated data of the another terminal device

| −1.0000 | −1.0000 | 1.0000 | −1.0000 | 0 | 1.0000 | 0 | 0 |
|---------|---------|--------|---------|---|--------|---|---|

2070: Restored demodulated data of the another terminal device

| 1 | 1 | 0 | 1 | 0 | 0 | 0 | 0 |
|---|---|---|---|---|---|---|---|

FIG. 20

**Polar K=128 N=512 UE=8 Ra=1 Rc=0.5**

FIG. 21

**Polar K=128 N=512 UE=8 Ra=1 Rc=0.875**

FIG. 22

2300 ⌐

┌─────────────────────────────────────────────────────────────────┐ ⌐ 2310
│ Determine, based on a probability distribution of sent data of an active │
│ terminal device, a probability distribution at a frozen position in polarized │
│ data associated with the sent data of the active terminal device │
└─────────────────────────────────────────────────────────────────┘

┌─────────────────────────────────────────────────────────────────┐ ⌐ 2320
│ Determine a posterior probability distribution at the frozen position based on │
│ an observation signal and the probability distribution at the frozen position │
└─────────────────────────────────────────────────────────────────┘

┌─────────────────────────────────────────────────────────────────┐ ⌐ 2330
│ Determine a value associated with a maximum posterior probability in the │
│ posterior probability distribution as a value at the frozen position │
└─────────────────────────────────────────────────────────────────┘

┌─────────────────────────────────────────────────────────────────┐ ⌐ 2340
│ Determine a probability distribution at a non-frozen position in the polarized │
│ data based on the value at the frozen position │
└─────────────────────────────────────────────────────────────────┘

┌─────────────────────────────────────────────────────────────────┐ ⌐ 2350
│ Determine a second predetermined quantity of pieces of polarized data based │
│ on the value at the frozen position and the probability distribution at the non- │
│ frozen position │
└─────────────────────────────────────────────────────────────────┘

┌─────────────────────────────────────────────────────────────────┐ ⌐ 2360
│ Determine, based on the second predetermined quantity of pieces of polarized │
│ data and a first matrix, an estimate of the sent data of the active terminal │
│ device │
└─────────────────────────────────────────────────────────────────┘

┌─────────────────────────────────────────────────────────────────┐ ⌐ 2370
│ Determine, based on the estimate of the sent data of the active terminal │
│ device, a soft value of the sent data of the active terminal device │
└─────────────────────────────────────────────────────────────────┘

FIG. 23

**Polar K=128 N=512 UE=8 Ra=1 Rc=7/8**

FIG. 24

FIG. 25

2600

Processing unit — 2610

Receiving unit — 2620

FIG. 26

2700

Processing unit — 2710

Sending unit — 2720

FIG. 27

2800

2840

2810

Communication interface

Processor

Memory — 2820

RAM — 2822

ROM — 2824
— 2830

FIG. 28

## INTERNATIONAL SEARCH REPORT

| | International application No. |
|---|---|
| | **PCT/CN2023/088960** |

### A. CLASSIFICATION OF SUBJECT MATTER

H04B1/69(2011.01)i; H04W4/70(2018.01)i

According to International Patent Classification (IPC) or to both national classification and IPC

### B. FIELDS SEARCHED

Minimum documentation searched (classification system followed by classification symbols)

IPC: H04B, H04W

Documentation searched other than minimum documentation to the extent that such documents are included in the fields searched

Electronic data base consulted during the international search (name of data base and, where practicable, search terms used)

CNABS, CNTXT, CNKI, VEN, ENTXTC, WOTXT, EPTXT, USTXT, 3GPP: 活跃, 激活, 数目, 数量, 矩阵, 序列, 概率, 扩频, 调制, 稀疏, 译码, 复杂度, 极化, 正交多址, activ+, number, matrix, sequence, probability, spread+, modulat+, spars+, decod+, complex+, polariz+, OMA, orthogonal w multiple w access

### C. DOCUMENTS CONSIDERED TO BE RELEVANT

| Category* | Citation of document, with indication, where appropriate, of the relevant passages | Relevant to claim No. |
|---|---|---|
| A | CN 115706591 A (DATANG MOBILE COMMUNICATIONS EQUIPMENT CO., LTD.) 17 February 2023 (2023-02-17)<br>entire document | 1-16 |
| A | CN 110062361 A (BEIJING JIAOTONG UNIVERSITY) 26 July 2019 (2019-07-26)<br>entire document | 1-16 |
| A | CN 106416307 A (HUAWEI TECHNOLOGIES CO., LTD.) 15 February 2017 (2017-02-15)<br>entire document | 1-16 |
| A | CN 112673599 A (ALCATEL-LUCENT SHANGHAI BELL CO., LTD. et al.) 16 April 2021 (2021-04-16)<br>entire document | 1-16 |
| A | CN 112787758 A (BEIJING INSTITUTE OF TECHNOLOGY) 11 May 2021 (2021-05-11)<br>entire document | 1-16 |
| A | US 2018351600 A1 (KOREA UNIVERSITY RESEARCH AND BUSINESS FOUNDATION) 06 December 2018 (2018-12-06)<br>entire document | 1-16 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 December 2023** | **14 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/088960**

| Patent document cited in search report | | | Publication date (day/month/year) | Patent family member(s) | | | Publication date (day/month/year) |
|---|---|---|---|---|---|---|---|
| CN | 115706591 | A | 17 February 2023 | None | | | |
| CN | 110062361 | A | 26 July 2019 | None | | | |
| CN | 106416307 | A | 15 February 2017 | WO | 2016172875 | A1 | 03 November 2016 |
| CN | 112673599 | A | 16 April 2021 | None | | | |
| CN | 112787758 | A | 11 May 2021 | None | | | |
| US | 2018351600 | A1 | 06 December 2018 | WO | 2017065355 | A1 | 20 April 2017 |
| | | | | KR | 101701421 | B1 | 13 February 2017 |
| | | | | US | 10567033 | B2 | 18 February 2020 |

Form PCT/ISA/210 (patent family annex) (July 2022)